# EUROPÄISCHE PATENTSCHRIFT

(11) **EP 2 906 406 B1**
(45) Veröffentlichungstag und Bekanntmachung des Hinweises auf die Patenterteilung: **17.07.2019**
(21) Anmeldenummer: 13701706.7
(22) Anmeldetag: 17.01.2013
(51) Int. Cl.: B29C 48/00, B29C 48/285, B29C 48/44, B29C 48/505, B29B 7/48, B29B 7/82, B29B 7/84, B29C 48/25, B29C 48/78

(54) **EXTRUDER ZUR VERARBEITUNG VON KUNSTSTOFFEN, DIE ZUM VERKLEBEN NEIGEN**
EXTRUDER FOR PROCESSING POLYMERIC MATERIALS TENDING TO ADHERENCE
EXTRUDEUSE POUR LE TRAITEMENT DE POLYMÈRES AYANT LA TENDANCE À L'ADHÉRENCE

(30) Priorität: 11.10.2012 DE 102012019727
(43) Veröffentlichungstag der Anmeldung: 19.08.2015
(73) Patentinhaber: Entex Rust & Mitschke GmbH, 44805 Bochum (DE)
(72) Erfinder: RUST, Harald, 44805 Bochum (DE)
(74) Vertreter: Kaewert, Klaus
(86) Internationale Anmeldenummer: PCT/EP2013/000132
(87) Internationale Veröffentlichungsnummer: WO 2014/056553

(56) Entgegenhaltungen:
- EP-A1- 2 098 354
- DE-A1- 1 595 735
- DE-A1- 2 303 366
- DE-A1- 3 517 128
- DE-A1- 3 937 612
- DE-A1- 19 548 136
- DE-A1- 19 856 235
- DE-A1-102010 026 535
- DE-C1- 19 508 125
- DE-U1- 8 812 244
- GB-A- 2 175 513

## Beschreibung

Bei den Extrudern werden folgende Hauptgruppen unterschieden:
Einschneckenextruder, Doppelschneckenextruder, Planetwalzenextruder.

Einschneckenextruder bestehen aus einer umlaufenden Schnecke und einem umgebenden Gehäuse. Mit Einschnecken läßt sich ein hoher Druckaufbau und eine große Förderwirkung erzielen. Jedoch ist die Homogenisierung und Dispergierung im Einschneckenextruder schwach. Gleichwohl sind Einschneckenextruder immer noch die meistbenutzten Extruder. Doppelschneckenextruder bestehen aus zwei parallel zueinander und miteinander kämmenden Schnecken und einem umgebenden Gehäuse. Mit Doppelschnecken läßt sich gleichfalls ein hoher Druckaufbau und eine hohe Förderwirkung erzielen. Die Mischwirkung des Doppelschneckenextruders ist um vieles größer als bei einem Einschneckenextruder, Jedoch erfahren Kunststoffe aufgrund der mechanischen Belastung im Doppelschneckenextruder eine mehr oder weniger große Veränderung ihrer Molekülketten. Es gibt Anwendungen, bei denen das dahinstehen kann. Für andere Anwendungen ist die Erhaltung der Molekülketten wichtig. Dann bietet sich der Planetwalzenextruder an.
Planetschneckenextruder bestehen aus einer mehr Teilen, nämlich einer umlaufenden Zentralspindel, einem die Zentralspindel im Abstand umgebenden Gehäuse mit einer Innenverzahnung und Planetspindeln, welche in dem Hohlraum zwischen Zentralspindel und innen verzahntem Gehäuse wie Planeten um die Zentralspindel umlaufen. Soweit im Folgenden von einer Innenverzahnung des Gehäuses gesprochen wird, so schließt das auch ein mehrteiliges Gehäuse mit einer Buchse ein, welches die Innenverzahnung des Gehäuses bildet. Im Planetwalzenextruder kämmen die Planetspindeln sowohl mit der Zentralspindel als auch mit dem innen verzahnten Gehäuse.

Zugleich gleiten die Planetspindeln mit dem in Förderrichtung weisenden Ende an einem Anlaufring.

Die Planetwalzenextruder besitzen im Vergleich zu allen anderen Extruderbauarten eine extrem gute Mischwirkung, jedoch eine viel geringere Förderwirkung.

Für eine kontinuierliche Aufbereitung von Kunststoffen ist seit einigen Jahrzehnten bekannt, Planetwalzenextruder zu verwenden. Solche Verfahren und entsprechende Planetwalzenextruder sind insbesondere in folgenden Druckschriften beschrieben:
DE 19939075A1, CA 698518, DE19653790A, DE 19638094A1, DE 19548136A1, DE1954214A, DE3908415A, DE19939077A, EP1078968A1,EP1067352A, EP854178A1, JP3017176, JP11080690, JP9326731, JP11-216754, JP11-216764, JP10-235713, WO2007/0874465A2, WO2004/101627A1, WO2004/101626A1, WO 2004/037941A2, EP1056584, PCT/EP99//00968, WO 94/11175, US6780271B1, US7476416.

Von Planetwalzenextruderabschnitten/Modulen wird dann gesprochen, wenn ein Extruder sich aus mehreren Abschnitten/Modulen zusammensetzt. Zumeist handelt es sich um unterschiedliche Abschnitte/Module. Seit Jahren hat es sich als günstig erwiesen, Planetwalzenextruderabschnitte/Module mit Abschnitten/Module anderer Bauart zu kombinieren. Insbesondere werden Planetwalzenextruderabschnitte/Module mit einem als Einschneckenextruderabschnitt/Modul ausgebildeten Füllteil kombiniert. Über das Füllteil werden die Einsatzmaterialien für die Extrusion aus einem Fülltrichter abgezogen und in die Planetwalzenextruderabschnitte/Module gedrückt. Die Verwendung eines Planetwalzenextruderabschnitts/Moduls als Füllteil hat sich nicht bewährt. Das aus einem Trichter nach unten austretende Material wird von den umlaufenden Planetspindeln wieder aus dem Füllteil herausgedrückt.

Soweit flüssige Treibmittel oder andere flüssige Stoffe in die Planetwalzenextrudserabschnitte/Module eingetragen werden sollen, hat es sich bewährt, diese Flüssigkeiten über Injektionsringe in die Anlage einzuspritzen, die zwischen jeweils zwei Planetwalzenextruderabschnitten/Modulen angeordnet sind.

Es ist auch bekannt, Schmelze über einen Seitenarmextruder oder eine Pumpe unmittelbar in einen Planetwalzenextruderabschnitt/Modul einzutragen.

Wegen der Einzelheiten und Variationen bekannter Planetwalzenextruder bzw. Abschnitten/Modulen wird Bezug genommen auf folgende Druckschriften:
DE 102005007952A1, DE102004061068A1, DE102004038875A1, DE102004048794A1, DE102004048773A1, DE102004048440A1, DE102004046228A1, DE102004044086A1, DE102004044085A1, DE102004038774A1, DE102004034039A1, DE102004032694A1, DE102004026799B4, DE102004023085A1, DE102004004230A1, DE102004002159A1, DE19962886A1, DE19962883A1, DE19962859A1, DE19960494A1, DE19958398A1, DE19956803A1, DE19956802A1, DE19953796A1, DE19953793A1.

Für die Extrusion finden neben den Kunststoffen noch diverse andere Materialien Verwendung. Dazu gehören Füllstoffe, Farbstoffe, Weichmacher, Stabilisatoren und andere Zusatz- und Hilfsstoffe bzw. Additive. Nicht alle Stoffe gleiten gut durch den Extruder. Manche Stoffe neigen von sich aus zum Kleben oder neigen nach Reaktion mit anderen Stoffen zum Anbacken im Extruder. Um das Kleben und Anbacken zu verhindern bzw. zu reduzieren, ist es bekannt, dem Extrusionsmaterial Gleitmittel zuzusetzen. Andererseits gibt es eine Vielzahl von Kunststoffen, für die Gleitmittel ungeeignet sind. Das gilt zum Beispiel für Klebstoffe, auch wenn die Klebstoffe im Extruder verarbeitet werden sollen Die Klebstoffaufbereitung mittels Extruder ist in folgenden Druckschriften beschrieben: CA698518, DE69937111, DE69808332, DE19939078, DE19939077, DE19939076, DE19939075, DE19939074, DE19939073, 19824071, DE19806609, DE19730854, DE19638094, DE19819349, DE19749443, DE19653790, DE19548136, DE19534239, DE10334363, DE10137620, DE20130049, DE10059875, DE10050295, DE10036707, DE10036706, DE10036705, DE4308098, DE4111217, DE3908415, DE2719095, DE235613, DE2303366, DE1954214, EP1080865, EP1078968, EP1067352, EP0854178, US6780271, US6179458, US5536462, US4268176, US4176967, WO2007/874465, WO2004/101627, WO2004/101626, WO220/037941, WO94/11175.

Darüber hinaus ist aus der EP2098354 ein Verfahren zur Herstellung einer hochkohäsiven Haftklebemasse bekannt, bei dem Planetwalzenextruderabschnitte Anwendung finden. Dabei werden die Rohstoffe über ein als Einschnecke ausgebildetes Füllteil zugeführt. Dies entspricht der herkömmlichen Rohstoffzuführung. Es findet sich dort aber auch ein Hinweis, daß die Rohstoffe direkt zwischen der Zentralspindel und den Planetspindeln eingebracht werden können. An der Selle ist der Materialeintrag so schwierig, daß eine Umsetzung dieses Vorschlages ohne weitere Einzelheiten nicht ohne weiteres möglich ist. Dabei ist der an anderer Stelle in dieser Druckschrift gegebene allgemeine Hinweis auf einen drucklosen Einzug ebenso wenig hilfreich wie der allgemeine Hinweis auf die Zuführung der Rohstoffe in Pelletform oder Granulatform.

Auch die DE19856235 zeigt einen Extruder mit Planetwalzenextruderabschnitten. In dieser Druckschrift ist in Spalte 2, unten, beschrieben, wie Rohstoffe zur Pulverlackherstellung duch einen Trichter in Granulatform mit zweckmäßigen Zuschlägen mittels eines Trichters unmittelbar durch den Gehäusemantel in einen Planetwalzenextruderteil aufgegeben werden. Einzelheiten zur Umsetzung dieses Vorschlages fehlen jedoch.

Die DE3517128 beschreibt einen Planetwalzenextruder mit einer Einfüllöffnung im Extrudermantel und einem darüber angeordneten Einfülltrichter 5. Durch die
Einfüllöffnung
wird das
Extrusionsmaterial
abgesehen von der Materialsäule im Trichter 5
drucklos
in den Extruder aufgegeben. Diese Art des Extruders hat sich nicht bewährt.

*Die* DE2303366 beschreibt einen Extruder in verschiedenen Ausführungsformen, wobei sich im Extrudermantel eine Einfüllöffnung und darüber ein Einfülltrichter für die Zugabe von Extrusionsmaterial befindet. In einer Ausführungsform ist der Extruder im Einfüllbereich als Planetwalzenextruder ausgebildet und der zur Verarbeitung vorgesehene Kunststoff
wird
über eine Stopfschnecke in die Einfüllöffnung des Extruders gedrückt.

Die DE1595735
offenbart
gleichfalls einen Planetwalzenextruder mit einer Materialzuführung. Auch hier erfolgt die Materialzuführung unter Druck.

Die DE19548136 zeigt gleichfalls einen Planetwalzenextruder. Der Planetwalzenextruder ist aus mehreren Modulen zusammen gesetzt. Die entstehende Schmelze wird aus jedem Modul abgezogen, entgast und dem nächsten Modul wieder zugeführt.

Soweit die im Extruder aufbereiteten Kunststoffe gleitmittelverträglich sind, hat sich das Gleitmittel durchgesetzt.

Gleichwohl hat sich die Erfindung die Aufgabe gestellt, den Einsatz von Gleitmitteln zu reduzieren. Darüber hinaus hat sich die Erfindung das Ziel gesetzt, ganz ohne Gleitmittel auszukommen, so daß auch gleitmittelunverträgliche Materialen besser im Extruder verarbeitet werden können.

Dabei geht die Erfindung von der Erkenntnis aus, daß die Gefahr des Klebens und Anbackens an der Schnecke des Füllteiles viel größer als an den Teilen der Planetwalzenextruderabschnitte/Module ist. Die Erfindung führt das darauf zurück, daß die Planetwalzenextruderabschnitte/Module einen sehr viel höheren Selbstreinigungseffekt als die Füllschnecke besitzen.

Die Erfindung hat sich deshalb zum Ziel gesetzt, einen anderen Materialeintrag als das Füllteil mit der Schnecke zu entwickeln. Die erfindungsgemäße Lösung wird mit den Merkmalen des Hauptanspruches erreicht. Die Unteransprüche beschreiben bevorzugte Ausführungsformen.

Dabei hat sich die Erfindung den früheren Versuchen mit einem als Füllteil mit Materialeinlauf ausgebildeten Planetwalzenextruderabschnitt/Modul zugewendet. Nach der Erfindung entsteht dabei ein Füllteil, wenn die Planetspindeln mindestens teilweise im Bereich der Einlauföffnung als Transportspindeln ausgebildet sind. Die Transportspindeln sind nachfolgend definiert.

Diese Ausbildung erlaubt vorteilhafterweise ein (abgesehen von der Füllhöhe des Einsatzmaterials in dem über der Einfüllöffnung angeordneten Fülltrichter) druckloses Eintreten des Einsatzmaterials in die Einfüllöffnung.

Darüber hinaus ist die erfindungsgemäße Ausbildung des Füllteiles auch dann von Vorteil, wenn das Füllteil mit einer Stopfschnecke/Stopfwerk versehen ist.

Stopfschnecken/Stopfwerke sind in diversen Druckschriften auch in Kombination mit Extruder, auch in Kombination mit Planetwalzenextrudern beschrieben. Beispielhaft wird Bezug genommen auf DE102007050466, DE102007041486, DE20003297, DE19930970, DE, DE102008058048, DE102007059299, DE102007049505, DE102006054204, DE102006033089, DE102004026599, DE19726415, DE10334363, DE20200601644, DE20200401971,DE10201000253, DE102009060881, DE102009060851, DE102009060813. Die Stopfschneck/Stopfwerk wird benutzt, wenn das für den Extruder vorgesehene Einsatzmaterial nicht allein aufgrund seines Gewichtes aus dem Fülltrichter des Füllteiles austritt und in die Einlauföffnung eintritt. Das ist zum Beispiel bei Fasern der Fall, die mit Kunststoff zu vermischen sind. Die Stopfschnecke/Stopfwerk zwingt das Einsatzmaterial dann in die Einlauföffnung des Extruders.
Im Falle der Stopfschnecke wird der Widerstand allen Einsatzmaterials gegen das Einziehen mit der erfindungsgemäßen Ausbildung erheblich reduziert.

Im Übrigen ist vorzugsweise ein besonderer Einlaufbereich an der Gehäuseinnenseite des Planetwalzenextruderabschnittes/Moduls vorgesehen.

Der Einlaufbereich ist die Ringfläche am Gehäusemantel des Planetwalzenextruderabschnitts/Moduls, in der Öffnung für den Materialeinlauf liegt, plus/minus einer Änderung der Ringflächenbreite von 50%, vorzugsweise plus/minus 30%, noch weiter bevorzugt plus/minus 10%, wobei sich die Änderung der Ringflächenbreite - ausgehend von der durch Mitte der Ringfläche gleichmäßig auf beide Ringflächenhälften verteilt, die beiderseits der Ringflächenmitte liegen.

Bei der erfindungsgemäßen Planetwalzenextruderabschnitten/Modulen, die als Füllteile Verwendung finden, kann die Einzugswirkung der Transportspindeln noch durch eine Abflachung der Gehäuseinnenverzahnung ergänzt werden. Die Abflachung hat aber auch unabhängig von der Verwendung von Planetspindeln Vorteile, die zumindest teilweise als Transportsprindeln ausgebildet sind.

Die Abflachung findet in dem Bereich statt, der sich in Umlaufrichtung der Zentralspindel an die Einlauföffnung anschließt. Bei ausreichender Stabilität der Planetspindeln hat die durch die Abflachung teilweise wegfallende Stütze der Planetspindeln keine Auswirkungen auf die Planetspindeln. Die Planetspindeln sind an ihren Enden ausreichend zwischen der Zentralspindel und der Gehäuseinnenverzahnung gehalten, weil die Gehäuseinnenverzahnung dort volle Zähne aufweist. Die aus der wegfallenden Stütze resultierende zusätzliche Biegelast der Planetspindeln wird von üblichen Planetspindeln ohne weiteres getragen.

Im Prinzip kann die Abflachung in Umlaufrichtung der Zentralspindel gleichmäßig verlaufen. Vorzugsweise ist jedoch vorgesehen, daß die Abflachung in Umlaufrichtung der Zentralspindel geringer wird. Dadurch entsteht eine trichterförmige Vergrößerung des Hohlraumes zwischen der Gehäuseinnenverzahnung und der Zentralspindel. Diese Vergrößerung verringert den Widerstand des Einsatzmaterials bei deren Einziehen in den Extruder. Die Trichterform lenkt das Einsatzmaterial in vorteilhafter Weise zwischen die Plaanetwalzenteile des Füllteiles.
Die Abflachung kann bis in den Zahngrund erfolgen. Vorzugsweise erfolgt eine Reduzierung der Zahnhöhe um maximal 90%, noch weiter bevorzugt um maximal 80%.
Trotz Abflachung wird immer noch alles Einsatzmaterial, welches in den Raum der bisherigen Zahnlücken gelangt, durch die Zähne der umlaufenden Planetspindeln verdrängt. Um zugleich zu verhindern, daß eine Ablagerung auf den Abflachungen stattfindet, können die abgeflachten Zähne mit neuen, weniger geneigten Zahnflanken versehen werden, so daß dort neue Zähne mit einem vorzugsweise gerundeten neuen Zahnkopf entstehen, so daß das aus dem bisherigen Zahngrund verdrängte Einsatzmaterial alles an den neuen Zahnflanken anhaftende Einsatzmaterial wegschiebt.
Solche Zahnänderungen lassen sich unter anderem mit elektrisch betriebenen Erodiervorrichtungen herstellen. Dabei wird mit einer Elektrode gearbeitet, welche der gewünschten neuen Abflachungszahnform angepaßt ist und mit dem Gehäuse in ein Erodierbad getaucht wird. Dabei wird die Elektrode dicht über die abzuflachende Verzahnung gebracht und das Werkstück mit Strom beaufschlagt, so daß sich die Moleküle aus der Oberfläche der abzuflachenden Verzahnung lösen und der Elektrode zuwandern.
Mit zunehmender Verformung der abzuflachenden Verzahnung wird die Elektrode nachgeführt, so daß ein gewünschter, geringer Abstand gewahrt bleibt.

Die beschriebene Raumvergrößerung durch Abflachung der Gehäuseinnenverzahnung ist davon abhängig, in welchem Maß die Abflachung sich in Umlaufrichtung der Zentralspindel erstreckt und in welchem Maß die Abflachung sich in axialer Richtung der Zentralspindel erstreckt.

Vorzugsweise ist das Maß der Abflachung mindestens 1/10, noch weiter bevorzugt mindestens 1/5 und höchst bevorzugt mindestens ½ des Umfanges des Teilkreises der Gehäuseinnenverzahnung.

Die Erstreckung der Abflachung in axialer Richtung der Zentralsprindel wird als Breite bezeichnet. Die Breite ist höchstens 30% größer oder kleiner als die Öffnungsweite der Einlauföffnung, vorzugsweise höchstens 20% größer oder kleiner als Öffnungsweite der Einlauföffnung und noch weiter bevorzugt höchstens 10% größer oder kleiner als die Öffnungsweite der Einlauföffnung. Höchst bevorzugt ist die Bereite der Abflachung gleich der öffnungsweise der Einlauföffnung.

Die sogenannten Transportspindeln entstehen, wenn an mindestens einer normalverzahnten Planetenspindel mindestens ein Zahn entfernt wird. Wahlweise werden auch mehr Zähne entfernt. Vorzugsweise verbleiben mindestens jeweils 3 gleichmäßig am Umfang der Planetspindeln. Es kann auch jeder vierte oder jeder dritte oder jeder zweite Zahn entfernt werden. Es kann können auch alle Zähne bis auf einen Zahn entfernt werden.
Soweit mehr als ein Zahn verbleibt, sind die Zähne vorzugsweise gleichmäßig am Umfang der Spindeln verteilt.
Dadurch entsteht ein reduzierter Zahnbesatz im Unterschied zu nicht reduziertem Zahnbesatz. Die Entfernung der Zähne erfolgt vorzugsweise bis in den Zahngrund. Denkbar ist auch eine darüber hinausgehende Materialausarbeitung, ebenso eine nur teilweise Entfernung der Zähne.
Alternativ werden die Transportspindeln von Anfang an so hergestellt, daß sie in der Form entstehen, welche entsteht, wenn an Standardspindeln einzelne oder mehrere Zähne entfernt werden.
Durch die ganze oder teilweise Entfernung bestimmter Zähne entsteht bei unverändertem Fortbestand der übrigen Zähne eine Planetspindel mit mehr Förderwirkung.
Es hat sich gezeigt, daß die Transportspindeln im Gegensatz zu anderen Planetsprindel das aus einem Aufgabetrichter in den Planetwalzenextruderabschnitt/Modul laufende Material gut aufnehmen.
Die Zahl der verbliebenen Zähne der Transportspindeln beträgt wahlweise höchstens 4, vorzugsweise 3, nach weiter bevorzugt 2 und höchst bevorzugt 1.
Die erfindungsgemäße "ganz oder teilweise" Ausbildung der Planetspindeln als Transportspindeln heißt, daß
a)Planetspindeln außerhalb des Bereiches der Einlauföffnung mit einer anderen Verzahnung versehen sind
   und/oder
b)Transportspindeln im Bereich der Einlauföffnung mit Planetspindeln anderer Verzahnung kombiniert ist.

Andere Verzahnung heißt zum Beispiel: Normalverzahnung oder Igelverzahnung oder Noppenspindeln. Die Igelverzahnung und/oder die Noppenverzahnung sind an dem in Förderrichtung des Planetwalzenextruderabschnitts/Moduls vorgesehen.

Die bekannte Igelverzahnung entsteht vorzugsweise aus einer Normalverzahnung, indem in axialen Abständen ringförmige Nuten in die Planetspindeln eingearbeitet werden. Dabei sind die ringförmigen Nuten so gewählt, daß die Zähne am Ende wie eine Schwingung auslaufen und am Anfang wie eine Schwingung ansteigen, wobei die Zähne vom Anfang sofort in das Ende übergehen. Dadurch ergeben sich runde Zähne.

Die Noppenverzahnung entsteht vorzugsweise aus der Normalverzahnung.
Die Normalverzahnung von Planetspindeln ist einerseits durch einen Querschnitt gekennzeichnet, wie ihn die ineinander greifenden Zähne der Zahnräder eines Getriebes zeigen. Anderseits verlaufen die Zähne nicht gerade sondern spindelförmig bzw. wie die Gewindegänge eines Schraubgewindes am Umfang entlang.
Die Gewindegänge werden auch in dieser Form in das Ausgangsmaterial der Planetspindeln geschnitten, z.B. gedreht oder gefräst.
Bei den Gewinden wird unterschieden zwischen linksgängigem Gewinde und rechtsgängigem Gewinde. Es gibt auch mehrgängige Gewinde.
Die gleiche Unterscheidung findet an Extruderspindeln statt.

Eine Noppenverzahnung entsteht, wenn z.B. in eine rechtsgängige Verzahnung eine linksgängig verlaufende Nut ähnlich einem Gewindegang eingearbeitet wird. Durch die Nut werden die Gewindegänge der Planetspindeln unterbrochen. Die Nut kann gleiche oder eine andere (geringer oder größere) Steigung als die Verzahnung der Spindeln besitzen. Die Steigung der Nut weicht vorzugsweise höchstens um 50% von der Steigung der Verzahnung ab.

Von Vorteil ist, wenn die Planetspindeln an dem gegen die Förderrichtung weisenden Ende außerhalb des Einlaufbereiches eine Normalverzahnung besitzen. Dort wird die größere Förderwirkung der Normalverzahnung genutzt, um zu verhindern, daß einlaufendes Einsatzmaterial sich entgegen der Förderrichtung des Extruders ausbreitet.
Eine Normalverzahnung kann aber außerhalb des Einlaufbereiches auch an dem in Förderrichtung des Planetwalzenextruderabschnitts/Moduls vorgesehen sein.
Wie oben unter b) ausgeführt, können Planetspindeln eines als Füllteil dienenden Planetwalzenextruderabschnitts/Moduls, die als Transportspindeln ausgebildet sind, mit anders ausgebildeten Planetspindeln kombiniert werden. Das heißt, der Planetspindelbesatz(Gesamtheit aller Planetspindeln) eines als Füllteil dienenden Planetwalzenextruderabschnitts/Moduls kann wahlweise auch zum Teil aus anders verzahnten Planetspindeln bestehen. Vorzugsweise ist der Anteil der Planetspindeln mit Transportspindelverzahnung mindestens 50%, vorzugsweise mindestens 70% und noch weiter bevorzugt mindestens 90% vom Planetspindelbesatz.

Bei teilweiser Verwendung von Transportspindeln für den Planetspindelbesatz sind die Planetspindeln mit Transportspindelverzahnung vorzugsweise gleichmäßig in dem Planetspindelbesatz verteilt.
Bei einem Planetspindelbesatz, der insgesamt mit Transportspindeln versehen ist, ist die Zahl der Zähne an den Transportspindeln so gewählt, daß mindestens innerhalb von 10 Umläufen der Planetspindeln um die Zentralspindel ein Planetspindelzahn in jede Zahnlücke der Zentralspindelverzahnung und in jede Zahnlücke der Innenverzahnung des umgebenden Gehäuses ein Zahn greift. Vorzugsweise erfolgt dieser Zahneingriff innerhalb von mindestens 7 Umläufen der Planetenspindeln um die Zentralspindel, noch weiter bevorzugt innerhalb von mindestens 4 Umläufen der Planetenspindeln um die Zentralspindel und höchst bevorzugt innerhalb von 1 Umlauf der Planetenspindeln um die Zentralspindel. Der Zahneingriff bewirkt eine Reinigung der Verzahnung.
Der Zahneingriff kann zum Beispiel dadurch kontrolliert/ausgelegt werden, daß ein bei Raumtemperatur schmelzflüssiges, farbiges Material mit ausreichender Haftung an Planetenspindeln, Zentralspindel und Innenverzahnung des Gehäuses in deren Zahnlücken geschmiert wird. Dann kann geklärt werden, nach wieviel Umläufen der Planetenspindeln um die Zentralspindel ein gewünschter Zahneingriff erfolgt ist. Das geschieht dann zum Beispiel nach einem Umlauf oder 4 Umläufen oder 7 Umläufen oder 10 Umläufen der Planetspindeln um die Zentralspindel durch Öffnen des erfindungsgemäßen Füllteiles.

Bei dem Vorgang steht der Umlauf der Planetspindeln um die Zentralspindel in einem festen Verhältnis zu der Umdrehung der Zentralspindel. Für die vorstehende Kontrolle/Auslegung kann die Zentralspindel des Füllteiles von Hand leicht gedreht werden, wenn das Füllteil von den übrigen Extruderabschnitten/Modulen gelöst ist. Dabei kann die Bewegung der Zentralspindel mit einem Musterstück der Zentralspindel simuliert werden. Wenn der gewünschte Zahneingriff nicht innerhalb der gewünschten Umlaufzahl der Planetenspindeln um die Zentralspindel erreicht wird, können die Planetspindeln gegen andere Planetspindeln ausgewechselt oder zusätzliche Planetspindeln zum Einsatz kommen. Die anderen Planetspindeln können als Transportspindeln mehr Zähne aufweisen und/oder anders angeordnete Zähne aufweisen. Wahlweise reicht schon die Auswechselung einer Transportspindel gegen eine normal verzahnte Planetspindel, um sicherzustellen, daß bei jedem Umlauf der Planeten ein Eingriff in jede Zahnlücke an der Zentralspindel und an dem innen verzahnten Gehäuse erfolgt.

Im Unterschied zum erfindungsgemäßen Füllteil hat eine übliche Füllschnecke in einem Füllteil keine vergleichbare Reinigung. Die Schnecke ist darauf angewiesen, daß nachdrängendes Einsatzmaterial das vorgehende Material herausschiebt. Das ist kaum zu kontrollieren. Das Einsatzmaterial strömt dorthin, wo der geringste Widerstand entgegensteht. Es läßt sich nicht sicherstellen, daß in dem gesamten, von der Schnecke im Füllteil offen gelassenen Durchtrittsraum überall gleiche Widerstände auftreten. Schon geringste Anbackungen/Verkleben können das Strömungsverhalten nachhaltig negativ beeinflussen. Ohne Eingreifen der Bedienungsleute kommt es kaum zu einer Reinigung.
In einem Planetwalzenextruder kommt es dagegen zwangsweise durch den jeweiligen Zahneingriff zu einer Reinigung. Das kann als Selbstreinigung bezeichnet werden.

Für die Verarbeitung verschiedener Kunststoffe ist es von großem Vorteil, das Füllteil zu temperieren. Zwar ist eine Temperierung der Füllschnecke an herkömmlichen Füllteilen bekannt. Die Temperierung setzt jedoch an den bekannten Füllteilen in Förderrichtung hinter der Einlauföffnung ein.
Nach der Erfindung setzt die Temperierung aber bereits an der Einlauföffnung ein.
Vorzugsweise ist das erfindungsgemäße Füllteil in mindestens zwei Temperierungsabschnitten unterteilt und/oder von kurzer Länge. Die kurze Länge bezieht sich auf die Füllteil-Länge nach der Einfüllöffnung. Die kurze Länge ist kleiner oder gleich 0,5 D, wobei D der Teilkreisdurchmesser der Innenverzahnung des Gehäuses ist.
Bei einer Füllteil-Länge von mehr als 2D(zum Beispiel 3D oder 4D), ist vorzugsweise eine abschnittsweise Temperierung vorgesehen, bei der der in Förderrichtung erste Temperierungsabschnitt eine Länge aufweist, die gleich der Länge eines kurzen Füllteiles (kleiner oder gleich 0,5D) ist. Jeder Temperierungsabschnitt ist mit einer Führung für die Temperierungsmittel versehen. Die Führung für das Temperierungsmittel erfolgt wie bei anderen bekannten Planetwalzenextruderabschnitten/Modulen. Dort werden Kühl/Heizkanäle vor der Montage der die Innenverzahnung tragenden Buchse in dem Gehäuse an der Gehäuse-Innenfläche und/oder an der Buchse-Außenfläche Kühl/Heizkanäle eingearbeitet. Die Kanäle verlaufen an der Innenfläche des Gehäuses und/oder an der Außenfläche der in dem Gehäuse sitzenden Buchse wie Gewindegänge. Am einen Ende der Gewindegänge tritt das Temperierungsmittel ein und am anderen Ende wieder aus. Die Kanäle werden durch die Buchse bei deren Montage verschlossen. Zu den Kühl/Heizkanälen führen Bohrungen in dem Gehäusemantel. An die Bohrungen sind Zuleitungen/Ableitungen für das Temperierungsmittel angeschlossen.
Das Temperierungsmittel ist zumeist Wasser, oft auch Öl. Das Temperierungsmittel kommt von einem außen an der Anlage stehenden Heiz/Kühlaggregat, in dem es auf die gewünschte Temperatur gebracht und dem zugehörigen Temperierungsabschnitt zugeleitet wird. In dem Temperierungsabschnitt gibt das Temperierungsmittel nach Bedarf Wärme ab bzw. nimmt das Temperierungsmittel nach Bedarf Wärme auf. Das austretende Temperierungsmittel wird dem außen an der Anlage stehenden Heiz/Kühlaggregat dann wieder zur erneuten Beladung mit Wärme oder zur Abkühlung zugeführt.

Das erfindungsgemäß als Planetwaltzenextruderabschnitt/Modul ausgebildete Füllteil besitzt vorzugsweise ein sich über die gesamte Füllteil-Länge erstreckendes Gehäuse mit oben beschriebener Buchse und eingearbeiteten Kühlkanälen. Die Kühlkanäle können dabei durchgehend von einem Gehäuseende zum anderen Gehäuseende verlaufen, um die Fertigung zu erleichtern. Vor der Montage der Buchse können die Enden der Kanäle durch Ringe verschlossen werden, die in entsprechenden Ausdrehungen der Gehäuseenden positioniert werden. Zur Aufteilung der gesamten Kühlstrecke in mehrere Abschnitte können vor dem Einsetzen der Buchse zwischen jeweils zwei Abschnitten Stopfen in jeden Kanal gesetzt werden. Die oben beschriebenen Bohrungen führen zu den Kanälen für das Temperierungsmittel. Dabei führen die einen Bohrungen zum Ende eines jeden Kanals und die anderen Bohrungen zum Anfang jeden Kanals.

Die Anwendung der erfindungsgemäßen Füllteile hat für verschiedene Materialien Vorteile. Dazu gehören unter anderem Elastomere, Polyurethane, Klebstoffen, Kaugummi

Die Elastomere und vergleichbare Stoffe haben in der Wirtschaft/Technik eine erhebliche Bedeutung. Überall, wo Kunststoff eine besonders starke Verformung erfahren sollen und nach einer Entlastung gleichwohl wieder die ursprüngliche Form einnehmen sollen, wird über Elastomere (Elaste) und dergleichen gummielastische Kunststoffe (Kautschuk) nachgedacht. Kunststoffe bestehen aus großen Molekülketten. Die hohe Elastizität der Elastomere wird durch ein Phänomen im Verhalten der Molekülketten gegeben. Bei einer Zugbelastung der ursprünglich im Knäuel liegenden Molekülketten ordnen sich die Molekülketten anders, vorzugsweise parallel, und dehnen sich die Molekülketten.
Für die gewünschte Verformung ist allerdings auch Voraussetzung, daß die Molekülketten nicht aneinander gleiten. Das wird durch eine Vernetzung der Molekülketten erreicht. Durch das Maß der Vernetzung wird die Verformung beeinflußt. Bei geringer Vernetzung entsteht ein weicher Kunststoff. Bei starker Vernetzung entsteht ein harter Kunststoff.
Es kommen unterschiedliche Vernetzungsmittel vor. In Abhängigkeit von dem Kunststoff findet eine Auswahl der Vernetzungsmittel statt. Schwefel gehört zu den häufig angewendeten Vernetzungsmittel. Schwefel tritt bei entsprechender Erwärmung des Kunststoffes als Vernetzungsmittel in Wirkung. Bei anderen Vernetzungsmitteln kommt es auf Wärmewirkung nicht an oder kann die Wirkung des Vernetzungsmittels auch von anderen Umständen abhängen.

### Zu den Elastomeren gehören zum Beispiel

Acrylnitril-Butadien-Kautschuk (NBR)
Acrylnitril/Butadien/Acrylat (A/B/A)
Acrylnitril/chloriertes Polethylen/Styrol (A/PE-C/S)
Acrylnitril/Methylmethacrylat (A/MMA)
Butadien-Kautschuk (BR)
Butylkautschuk (HR) (IIR
Chloropren-Kautschuk (CR)
Ethylen-Ehylacrylat-Copolymer (E/EA)
Ethylen-Propylen-Copolymer (EPM)
Ethylen-Propylen-Dien-Kautschuk (EPDM)
Ethylenvinylacetat (EVA)
Fluorkautschuk (FPM oder FKM)
Isopren-Kautschuk (IR)
Naturkautschuk (NR)
Polybutadienkautschuk BR
Polyethylenharze
Polyisobutylen (PIB)
Polspropylenharze
Polyvinylbutyral (PVB)
Silicon-Kautschuk (Q oder SIR)
Styrol-Isopren-Styrol-Blockcopolymer (SIS)
Styrol-Butadien-Kautschuk (SBR)
Styrol-Butadien-Styrol (SBS)
Thermoplastisches Polyurethan (TPU oder TPE-U)
Vinylchlorid/Ethylen (VC/E)
Vinylchlorid/Ethylen/Methacrylat (VC/E/MA)

Bei Elastomeren ist die Gefahr des Verklebens und Anbacken besonders groß, wenn Vernetzungsmittel zusammen mit anderem Material über das Füllteil eingezogen werden, die auf Erwärmung ansprechen. Solche Elastomere sind zum Beispiel aus der DE60124269, DE 3738335 bekannt. Dann führt jedes Kleben und Anbacken zu unvorhergesehener Erwärmung zum unvorhergesehenen Beginn der Vernetzung und zu einer schlechteren Materialbeschaffenheit. Mit dem erfindungsgemäßen Füllteil können die durch Kleben und Anbacken im Füllteil zu befürchtenden Schwierigkeiten vermieden werden.

Bei Polyurethanen kommt es auf die Zusammenführung zweier Reaktionskomponenten im richtigen Verhältnis an. Es ist bekannt, die Reaktionskomponenten mit Hilfe eines Extruders zusammen zu führen. Das ist zum Beispiel beschrieben in DD 141975, DE 1964834, US 3233025, DE 2059570, DE 2447368. Geringe Unregelmäßigkeit in der Materialführung beeinträchtigen bereits die Mischung. Auch das kann mit dem erfindungsgemäßen Füllteil im Einzugsbereich vermieden werden.

Die Verarbeitung von Klebstoffen im Extruder ist zum Beispiel beschrieben in EP 1167017.

Durch Verwendung des erfindungsgemäßen Füllteiles kann die Klebstoffverarbeitung im Extruder wesentlich erleichtert werden.

Die Verarbeitung von Kaugummi im Extruder ist bekannt. In der wärmempfindlichen Grundmischung finden sich Lecithin, Weichmacher, Sirup, Zucker, Öle, Duftstoffe und Elastomere. Darunter sind stark klebende und zur Anbackung neigende Bestandteile. Entsprechende Hinweise finden sich in der DE 69829695, US 5135760, US 5045325, US 4555366. Auch diese Herstellung wird mit dem erfindungsgemäßen Füllteil wesentlich erleichtert.

Das erfindungsgemäße Füllteil kann mit anderen Planetwalzenextruderabschnitten/Modulen kombiniert werden. Die wesentlichen Bestandteile der anderen Planetwalzenextruderabschnitte sind wiederum die Zentralspindel, umlaufende Planetspindeln und ein innen verzahntes Gehäuse sowie ein Anlaufring für die Plenetspindeln. Die Funktion dieser Teile ist die gleiche wie eingangs an Planetwalzenextrudern dargelegt.
Die Planetspindeln können unterschiedliche Ausbildung aufweisen.
Vorzugsweise zeigen die Planetspindeln eine Standardverzahnung und/oder eine Igelverzahnung und/oder eine Noppenverzahnung und/oder eine Tansportspindelverzahnung.

Die Standardverzahnung ist eine Evolventenverzahnung. Die Evolvente bestimmt die Zahnform im Querschnitt. Im Übrigen verlaufen die Zähne am Umfang der Planetspindeln wie die Gewindezähne der Außenverzahnung einer Gewindestange.

Die Igelverzahnung entsteht in der oben beschriebenen Form aus einer Standardverzahnung. Desgleichen entsteht die Noppenverzahnung in der oben beschriebenen Form aus einer Standardverzahnung.
Auch die Standardverzahnung entsteht in der oben beschriebenen Form aus einer Standardverzahnung.

Dabei können die verschiedenen Verzahnungsarten (Standard/Igel/Noppen/Transport) auf einzelne Planetwalzenteile beschränkt sein. Die verschiedenen Verzahnungsarten (Standard/Igel/Noppen/Transport) können auch in mehreren oder in allen Planetwalzenteilen vorgesehen sein.

Die verschiedenen Verzahnungsarten (Standard/Igel/Noppen/Transport) können auch alle zusammen oder in zwei oder drei verschiedenen Verzahnungsarten an den Planetspindeln zusammen vorkommen. Die vorstehenden Variationen in der Verzahnung können alle Plenetspindeln oder nur einen Teil der Planetspindeln eines Planetwalzenextruderabschnitts/Moduls betreffen.
Günstig ist, den normalverzahnten Teil der Planetspindeln in Förderrichtung des Extruders am hinter Ende (am austragseitigen Ende der Planetspindeln/in Förderrichtung weisenden Ende) der Planetspindeln anzuordnen, um dort einen Förderdruck aufzubauen, der einen Übergang des Granulates in den weiteren Extruderbereich erleichtert..

Wahlweise können sich besonders verzahnte Planetspindeln mit anders verzahnten Planetspindeln abwechseln.
Wahlweise können auch einzelne besonders verzahnte Planetspindeln zwischen einer Vielzahl anders verzahnten Planetspindeln angeordnet sein. Günstig ist dabei, wenn immer mindestens zwei gleichartig verzahnte Planetspindeln in einem Planetspindelbesatz eines Planetwalzenextruderabschnitts/Moduls vorkommen, die gleichmäßig im Besatz verteilt sind.

Sofern die Noppenverzahnung/Igelverzahnung in mehreren korrespondierenden Planetwalzenteilen(Gehäuseinnenverzahnung, Planetspindeln und Zentralspindel) vorgesehen ist, kann die Noppenverzahnung so angeordnet werden, daß die Unterbrechungen der Verzahnung im einen Planetwalzenteil mit den Unterbrechnungen im korrespondierenden Planetwalzenteil fluchten oder im Verhältnis zu diesen Unterbrechungen versetzt sind. Der Versatz kann ein Maß haben, das gleich einem Bruchteil der Zahnlücke zwischen zwei Zähnen oder ein Mehrfaches der Zahnlücke zwischen zwei Zähnen ist, wobei ein Mehrfaches auch eine Zahl kleiner 2 sein kann.
Durch die Unterbrechung der Zähne entstehen Öffnungen, in welche das Extrusionsgut strömen kann.

Vorzugsweise besitzen die weiteren Planetwalzenabschnitte/Module eine Länge von höchstens 1200 mm bei einem Durchmesser bis 100 mm in der Verzahnung des Planetwalten-Extrudergehäuses, noch weiter bevorzugt von höchstens 1000 mm. Bei anderen Durchmessern der Verzahnung des Planetwalzen-Extrudergehäuses ergeben sich entsprechend größere oder kleinere maximale Längen.

Beim Extrudieren wird im Extruder bzw. im Extruderabschnitt in erheblichem Umfang Energie freigesetzt, die sich in dem Granulat als Wärme zeigt. Sofern das Granulat schon mit erheblicher Temperatur in den Planetwalzenextruder bzw. den Planetwalzenextruderabschnitt gelangt, kann es erforderlich werden, die anfallende Wärme durch Kühlung abzuführen. Sofern das Granulat beim Eintritt in den Planetwalzenextruder bzw. den Extruderabschnitt noch keine ausreichende Temperatur hat, unterbleibt obige Kühlung. Gegebenenfalls wird sogar Wärme zugeführt.
Für die Kühlung und/oder Erwärmung sind übliche Temperierungseinrichtungen an Planetwalzenextrudern ausreichend. Üblich ist es, das Gehäuse zweischalig(wie oben zum erfindungsgemäßen Füllteil beschrieben mit Gehäuse und innen liegender Buchse) auszuführen und das Temperierungsmittel durch den Zwischenraum zu leiten. Üblich ist auch, die Zentralspindel mit Kanälen zu versehen, durch die gleichfalls Temperierungsmittel geleitet wird. Das übliche Temperierungsmittel ist Wasser oder Öl, mit dem beheizt oder gekühlt wird.

Zu den Planetspindeln, welche als Transportspindeln ausgebildet sind, kann noch Folgendes von Vorteil sein:
Die Entfernung der Zähne kann an vorhandenen Planetspindeln nachträglich erfolgen. Soweit eine Vorratshaltung an Planetspindeln stattfindet und soweit eine Vergütung oder Härten oder sonstiges Behandeln zur Erhöhung der Verschleißfestigkeit der Zahnflächen vorgesehen ist, werden die Planetspindeln vorzugsweise ohne die Oberflächenbehandlung bevorratet, damit im nachhinein eine einfache erfindungsgemäße Bearbeitung der Planetspindeln, z.B. durch Fräsen, möglich ist. Die Behandlung der Zahnflächen erfolgt nach der Bearbeitung.

Überraschenderweise beeinträchtigt das Entfernen von Zähnen die Laufruhe der Planetspindeln nicht, weil die Zähne wie Schrauben/Gewindegänge an der Oberfläche der Planetspindeln verlaufen. Bei ausreichender Länge der Spindeln und entsprechender Steigung umschlingen die schraubenförmig bzw. gewindegangförmig verlaufenden Zähne die Spindeln so häufig, daß die Planetspindeln zwischen der Zentralspindel und dem umgebenden Gehäuse sicher geführt und fixiert sind. Bei einer Planetspindel, bei der jeder zweite Zahn entfernt worden ist, ist nach der Erfindung vorzugsweise
a) bei einem Planetwalzengehäusedurchmesser (bezogen auf den Teilkreisdurchmesser der Innenverzahnung des Gehäuses) kleiner 160 mm eine erfindungsgemäß bearbeitete Mindest-Spindellänge von 200 mm, bevorzugt von mindestens 300m und weiter bevorzugt eine Spindellänge von mindestens 400 mm und erfindungsgemäß bearbeitete Maximal-Spindellänge bis 1500 mm, vorzugsweise bis 1200mm und höchst bevorzugt bis 900 mm für eine Planetspindel vorgesehen.
b) bei einem Planetwalzengehäusedurchmesser (bezogen auf den Teilkreisdurchmesser der Innenverzahnung des Gehäuses) von 160 mm und mehr
   eine erfindungsgemäß bearbeitete Mindest-Spindellänge von mindestens 400 mm, bevorzugt von mindestens 800m und weiter bevorzugt eine Spindellänge von mindestens 1200 mm
   und eine Maximal-Spindellänge bis 3000 mm, vorzugsweise bis 2500mm und noch weiter bevorzugt bis 2000mm vorgesehen.

Die vorstehende Mindest-Spindellänge bezieht sich auf die Verzahnung an der Planetspindel. Zu der Mindest-Spindel-Spindellänge gehört vorzugsweise nicht die Verzahnung, welche beim oben beschriebenen Auslaufen von Fräsern entsteht und/oder beim Einlaufen des Fräsers auf Sollfrästiefe entsteht, wenn die Planetspindellänge größer als die Verzahnungslänge der Planetspindel ist.

Die Bearbeitung(Entfernen von Zähnen) der Planetspindeln kann auf alle bekannten Zahnmodule Anwendung finden, insbesondere auf die gebräuchlichen Module 1,5 bis 12 oder darüber hinaus bis 20. Die Zahnmodule sind von den oben erwähnten
Planetwalzenteilen/Modulen zu unterscheiden. Die Zahnmodule kennzeichnen die Größe der Zähne.

Vorzugsweise sind die als Planetwalzenextruder ausgebildeten Extruderabschnitte/Module in einer Stufe der Extrusionsanlage angeordnet. Wahlweise kann es sich auch um eine mehrstufige Extrusionsanlage handeln. Bei zwei Stufen spricht man von einer Tandemanlage mit einem Primärextruder und einem Sekundärextruder. Bei mehr Stufen spricht man von einer Kaskadenanlage. Die mehrstufige Anordnung einer Extrusionsanlage wird genutzt, um zwischen den Stufen eine Entgasung des Extrusionsgutes durchzuführen und/oder um die einzelnen Stufen unabhängig voneinander antreiben zu können.

Zu der Extrusionsanlage gehört zumeist auch ein am Ende vorgesehener Extruderabschnitt, in dem das Extrusionsgut auf Austrittstemperatur gebracht wird.

Die Plaentwalzenabschnitte/Module werden mit den anderen Abschnitten/Modulen zu dem jeweils gewünschten Extruder zusammengesetzt. Dabei ist es üblich, für alle hintereinander angeordneten Module einer Stufe einer Extrusionsanlage eine gemeinsame Zentralspindel vorzusehen.

Die Modulbauweise ist mit einem Baukastensystem vergleichbar und in der Regel besonders wirtschaftlich.
Die verschiedenen Planetenteile (Zentralspindel/Planetspindeln/Innenverzahnung) eines Abschnittes/Moduls haben regelmäßig den gleichen Zahnmodul.

Wahlweise werden die Zähne nicht nachträglich entfernt, sondern findet eine Fertigung statt, bei der die Planetspindeln sofort in die Form gebracht werden, wie sie nach der oben beschriebenen Zahnentfernung ensteht.
Dazu ist zunächst darauf einzugehen, wie die Zähne bei herkömmlicher Verzahnung entstehen. Verbreitet ist die Herstellung durch Fräsen und Schleifen. Dazu wird die Kontur der Verzahnung festgelegt und der Fräser entlang der Kontur bewegt. Der Fräser arbeitet dabei verhältnismäßig grob. Deshalb ist anschließend eine Feinbearbeitung üblich, z.B. durch Schleifen bei außen verzahnten Teilen oder durch Honen oder Erodieren bei innen verzahnten Teilen üblich. Es sind auch umformende Herstellungsverfahren für Getriebeteile bekannt, das sind Gießen und Sintern. Zu den umformenden Herstellungsverfahren zählt auch Schmieden, Pressen, Ziehen, Walzen, Stanzen).
Das Fräsen gehört zur spanenden Herstellung. Andere spanende Verfahren sind zum Beispiel Hobeln, Stoßen, Räumen, Schaben, Schleifen, Honen.

Allen Herstellungsverfahren für Verzahnungen ist gemeinsam, daß sie der festgelegten Kontur der Verzahnung folgen. Bei normaler Verzahnung wechselt ein Zahn mit einer Zahnlücke. Der Abstand zwischen zwei benachbarten Zähnen eines Teiles ist gleich

Bei der Festlegung der Kontur kommt es auf die Verzahnung an. Die Verzahnung folgt den allgemeinen Erkenntnissen der Getriebetechnik.
Man unterscheidet verschiedene Grundformen von Verzahnungen: Evolventenverzahnung als übliche Verzahnung, Zykloidenverzahnung und Treibstockverzahnung. Darüber hinaus gibt es diverse Sonderformen.

Bei Planetwalzenextrudern hat sich die Evolventenverzahnung durchgesetzt. Die Evolventenverzahnung mit vollem Zahnbesatz wird im Folgenden als Normalverzahnung bezeichnet.
Bei der Evolventenverzahnung werden die Flanken der Zähne des Zahnrades von Evolventen gebildet. Vorstellen kann man sich die Evolventen, wenn man sich den Zahnradgrundkreis als massiven Zylinder vorstellt, um den ein Faden gewickelt ist. Wird dieser Faden nun abgewickelt, so beschreibt der straff gespannte Endpunkt des Fadens die Figur einer Evolvente. Alle Punkte auf dem Faden, welche den ganzzahlig vielfachen Abstand vom Endpunkt aufweisen, bewegen sich somit auf der Evolvente eines anderen Zahnes. Die Evolventenverzahnungen haben folgende Vorteile:
Die Flanken zweier im Eingriff befindlicher Zahnräder berühren sich immer, und in diesen Berührungspunkten haben sie stets die annähernd gleiche Geschwindigkeit. Somit ist gewährleistet, daß die Übertragung der Drehbewegung reibungsarm erfolgt.
Gleichzeitig erlaubt die Evolventenverzahnung die gleichmäßige Übertragung von Drehmomenten durch eine konstante Übersetzung.
Sie ist unempflindlich gegen das Verschieben der Achsen der Zahnräder (Achsabstandsunabhängigkeit).
Sie ist einfach in der Fertigung durch standardisierte geradlinige Werkzeuge.
Bei gleicher Geometrie des Werkzeuges sind Zahnräder mit unterschiedlicher Zähnezahl und unterschiedlicher Profilverschiebung frei miteinander kombinierbar.

Bei Planetwalzengetrieben ist man wie bei anderen Getrieben bemüht, mit möglichst geringem Spiel zwischen den Getriebeteilen zu arbeiten. Das Spiel kann bei der Festlegung der Kontur berücksichtigt werden. Bei Planetwalzenextrudern ist üblicherweise ein sehr viel größeres Spiel vorgesehen. Auch dieses Spiel kann bei der Festlegung der Zahnkontur berücksichtigt werden.

Bei üblicher Verzahnung folgt ein Zahn einer Zahnlücke und einer Zahnlücke ein Zahn, wobei die Zähne und die Zahnlücken gleich sind. Da die Zähne in die Zahnlücken greifen und die miteinander kämmenden/ineinander greifenden Getriebeteile die gleiche Verzahnung haben sollen, beinhalten die Zahnlücken eine spiegelverkehrte Abbildung der Zähne.
Bei der erfindungsgemäßen Gestaltung der Verzahnung sind die Zahnlücken aber anders als bei üblicher Verzahnung. Bei der oben beschriebenen Herstellung der erfindungsgemäßen Verzahnung werden dazu an vorhandenen Getriebeteilen einzelne oder mehrere Zähne entfernt. Alternativ werden schon bei der Festlegung der Zahnkontur einzelne oder mehrere Zähne entfernt. Die Herstellung folgt dann in der oben beschriebenen Weise der festgelegten erfindungsgemäßen Zahnkontur. Das heißt, im Falle der Anwendung eines Fräsers, folgt der Fräser der vorher festgelegten neuen Kontur mit größeren Zahnlücken. Entsprechendes gilt für andere Werkzeuge zur Herstellung der vorher festgelegten neuen Kontur.

Günstig ist es, wenn die Zahl der Zähne von Gehäuseinnenverzahnung(Buchsenverzahnung), Planetspindeln und Zentralspindel so gewählt ist, daß die Zähnezahl an der Zentralspindel und an der Gehäuseinnenverzahnung(Buchsenverzahnung) gerade ist und die Zähnezahl an den Planetspindeln ungerade ist. Dann wird die Schmelze in jeder Zahnlücke zwischen zwei Zähnen durch die in den Zwischenraum eindringenden Zähne anderer Teile des Planetwalzenextruders verdrängt.
Die gleichen Verhältnisse ergeben sich bei ungeraden Zähnezahlen an Zentralspindel und Gehäuseinnenverzahnung und gerade Zähnezahl an den Planetspindeln.
Das gleiche Ergebnis kann durch unregelmäßiges Entfernen des Zahnbesatzes bei der Herstellung der Transportspindeln erreicht werden, zum Beispiel dadurch, daß nicht regelmäßig jeder zweite Zahn, sondern einmal oder mehrmals ein anderer Zahn, zum Beispiel der dritte Zahn entfernt wird oder zum Beispiel zwei ursprünglich neben einander stehende Zähne unberührt bleiben. Das heißt, die Bearbeitung erfolgt in unterschiedlichen Abständen. Dabei kann ausreichend sein, daß ein Abstand anders als die anderen Abstände ist. Es können auch mehrer Abstände anders sein.
Das gleiche Ergebnis kann auch dadurch erreicht werden, daß erfindungsgemäß bearbeitete Planetspindeln mit unbearbeiteten Planetspindeln kombiniert werden oder das unterschiedlich erfindungsgemäß bearbeitete Planetspindeln miteinander kombiniert werden.

Die Transportspindeln und der zugehörige Stand der Technik sind beschrieben in DE 102006033089A1, EP1844917A2, DE2702390A, EP1833101A1, DE10142890A1, US4981711, GB2175513A, US5947593, DE2719095.
Zu jedem Planetwalzenextruder gehört ein maximaler Planetspindelbesatz. Dabei handelt es sich um die maximale Zahl von Planetspindeln, die zwischen Innenverzahnung des umgebenden Gehäuses und der Zentralspindel Platz finden können, ohne daß sich die Planetspindeln gegenseitig an einer Drehung hindern.

Der maximale Planetspindelbesatz hängt von dem jeweiligen Verzahnungsmodul ab. Während der Planetwalzenextrudermodul ein Exrtruderabschnitt ist, handelt es sich bei dem Verzahnungsmodul um eine die Form der Zähne und der Zahnlücken bestimmende Berechnungs/Konstruktionsgröße.

Durch Wahl eines im Vergleich zu dem maximalen Planetspindelbesatz geringeren Planetspindelbesatz kann zusätzlich zum erfindungsgemäßen Einsatz von Transportspindeln eine Reduktion des Energieeintrages in das Einsatzgut im Extruder erfolgen. Vorzugsweise ist im Vergleich zu dem maximalen Planetspindelbesatz mindestens eine Verringerung der Planetspindelzahl um eins, wahlweise auch um mindestens 2 oder mindestens drei vorgesehen.

Wahlweise sind auch mehrteilige Planetspindeln vorgesehen, nämlich mit einem separat und erfindungsgemäß bearbeiteten Teil und mit einem separat hergestellten Restteil. Der Restteil kann ein Noppenverzahnungsteil oder ein normal verzahntes Teil oder ein anderes Teil sein. Beide Teile sind zugleich mit einer mittigen Bohrung für einen Anker versehen, mit dem die beiden Teile miteinander verspannt werden. Auf dem Wege entstehen mehrteilige Planetspindeln, die über ihrer Länge einen Verzahnungswechsel aufweisen, daß heißt von einer erfindungsgemäßen Verzahnung zu einer anderen Verzahnung wechseln.

Die Mehrteiligkeit kann bei der Herstellung der Verzahnung Vorteile haben, indem die Teile mit unterschiedlicher Verzahnung separat hergestellt werden. Dann müssen die Werkzeuge dem Zahnwechsel nicht folgen. Im Zusammenhang mit einem gewünschten schlagartigen Wechsel der Verzahnung bietet sich eine solche Vorgehensweise an.

Auf der anderen Seite kann verfahrenstechnisch auch ein langsamer Wechsel von einer Verzahnung zur anderen von Vorteil sein. Ein langsamer Übergang von einer oben beschriebenen Verzahnung zu einer Normalverzahnung entsteht in der Anwendung eines Fräsers zum Beispiel dadurch, daß der für die nachträgliche Zahnentfernung eingesetzte Fräser langsam aus dem Material der Planetspindel herausgefahren wird.

Die mehrteiligen Planetspindeln können auch einen mehrfachen Verzahnungswechsel besitzen.

Es kommen auch einteilige Planetspindeln in Betracht, die über Ihrer Länge in der Verzahnung einen oder mehrere Verzahnungswechsel zeigen.

Für jeden Wechsel der Verzahnung gelten die Ausführungen zur nachträglichen Entfernung von Zähnen und der vorhergehenden Festlegung der Zahnkontur entsprechend.

Je nach Extrusionsgut kann auch eine Entgasung erforderlich werden. Wegen der Einzelheiten wird zum Beispiel auf folgende Entgasungsvorgänge verwiesen:
DE102004061185A1, DE102004060966A1, DE102004053929A1, DE1020040050058A1, DE102004004237A1, DE69908565T2, DE69827497T2, DE69807708T2, DE69725985T2, DE69715781T2, DE69715082T2, DE69711597T2, DE69710878T2, DE69709015T2, DE69707763T2, DE69630762T2, DE69628188T2, DE69622375T2, DE69428309T2, DE69427539T2, DE69419146T2, DE69312852T2, DE69312246T2, DE69306874T2, DE69207369T2, DE68928567T2, DE68915788T3, DE60206271T2, DE60012108T2, DE19956483A1, DE19954313A1, DE10257377A1, DE10356821A1, DE10354546A1, DE10354379A1, DE10352444A1, DE10352440A1, DE10352439A1, DE10352432A1, DE10352431A1, DE10352430A1, DE10351463A1, DE10349144A1, DE10345043A1, DE10343964A1, DE10342822A1, DE10340977B4, DE10340976B4, DE10333927A1.

Wahlweise findet der erfindungsgemäße Einzug auch in Kombination mit einer weiteren Bearbeitung des Extrusionsmaterials in einem Einschneckenextruder oder einem Doppelschneckenextruder Anwendung.
In der Kombination mit einem Einschneckenextruder setzt sich die Zentralschnecke in dem dem Einzug folgenden Extruderabschnitt als Einschnecke fort.
In der Kombination mit einem Doppelschneckenextruder setzt sich die Zentralspindel in dem Einzug als eine der beiden Schnecken des Doppelschneckenextruders fort.

Im Übrigen ist von Vorteil, wenn das Gehäuse am Übergang der Einlauföffnung in die Gehäuseverzahnung eine Abrundung aufweist. Vorzugsweise hat die Abrundung dabei einen Radius, der mindestens gleich ¼ der Zahnhöhe, noch weiter bevorzugt mindestens gleich ½ der Zahnhöhe der Gehäuseverzahnung ist.

In der Zeichnung sind verschiedene Ausführungsbeispiele der Erfindung dargestellt.

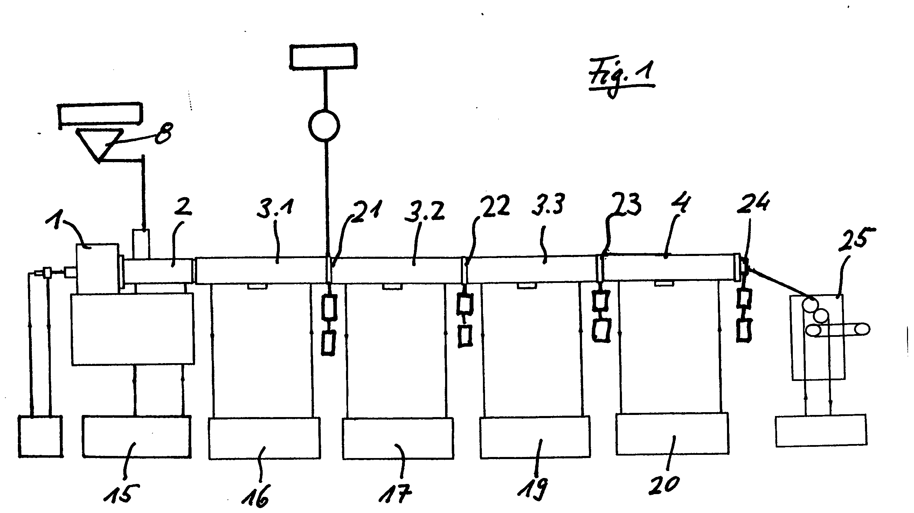

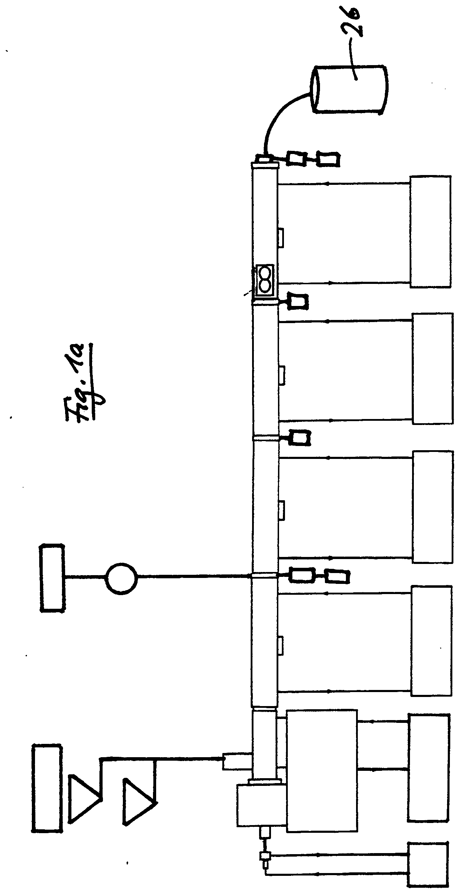

Fig. 1 zeigt einen Extruder mit folgenden Komponenten/Abschnitten: Antrieb 1, Einzug 2, Planetwalzenextruderabschnitte 3.1, 3.2 und 3.3, 4 und Austragdüse 6.
In den Einzug 2 mündet eine Dosierung 8. Von dem Behälter 8 führt eine Dosierungsleitung in den Einzug 2.

Die Dosierung wird in nicht dargestellter Form mit thermoplastischem EPDM-Granulat für dessen Verarbeitung gefüllt und geschlossen.

Das EPDM-Granulat gelangt in den Einzug 2 und wird von dort in Extrusionsrichtung gefördert. Die Extrusionsrichtung weist in der Zeichnung von links nach rechts.
Der Einzug 2 ist in Modulbauweise gestaltet. Dieser Modul hat die Bauweise eines Planetwalzenextruders.
In dem Einzug 2 findet eine erste Erwärmung statt.
Für die Erwärmung des EPDM -Granulats ist ein Heiz-Kühlkreis 15 vorgesehen. Der Heiz-Kühlkreis 15 wirkt mit dem Gehäusemantel des Moduls zusammen. Über den Gehäusemantel wird die Wärme auf das eingefüllte EPDM-Granulat übertragen. Zusätzlich erzeugt die in dem Modul 2 umlaufende Schnecke eine Erwärmung des EPDM-Granulats.

Das EPDM-Granulat gelangt im Ausführungsbeispiel mit Vorwärmtemperatur von 140 Grad Celsius in den nächsten Extruderabschnitt/Modul 3.1. An den Extruderabschnitt/Modul 3.1 schließen sich Extruderabschnitte/Module 3.2 und 3.3,4. Die Module 3.1 bis 4 haben die Bauweise von Planetwalzenextrudern. Die Module 2, 3.1, 3.2 und 3.3, 4 besitzen aufeinander abgestimmte Gehäuse und nicht dargestellte Anschlußflansche, an denen sie miteinander verbunden werden. Die Verbindung ist eine Verschraubung.

In dem Planetwalzenextruderabschnitten/Modulen 3.1, 3.2 und 3.3, 4 wird das EPDM-Granulat zwischen den umlaufenden Planetspindeln, der Zentralspindel und dem innen verzahnten Extrudergehäuse vielfach geknetet, so daß sich immer neue Oberflächen bilden, die zur Wärmeübertragung genutzt werden können.
Dabei kann Wärme von dem Gehäusemantel auf das EPDM übertragen werden oder von dem EPDM abgezogen und über den Gehäusemantel abgeführt werden.
Wie im Modul 2 sind die Module 3.1, 3.2 und 3.3 sowie 4 mit Heiz-Kühlkreisen 16, 17, 19, 20 versehen.

In den Extruderabschnitten/Modulen 3.1, 3.2 und 3.3 wird das EPDM auf eine Temperatur von 300 Grad Celsius gebracht, in dem Extruderabschnitt/Modul 4 auf eine Temperatur von 220 Grad Celsius. Die Heiz-Kühlkreise 16, 17, 19, 20 gewährleisten die Einhaltung der gewünschten Temperatur. Dabei wird durch die Verformungsarbeit der Extruderabschnitte/Module Wärme in das EPDM eingetragen. Soweit der Wärmeeintrag für das Erreichen der gewünschten Temperatur unzureichend ist, wird die fehlende Wärme von den Heiz-Kühlkreisen über den zugehörigen Gehäusemantel der Modul auf das EPDM übertragen. Soweit die durch die Verformungsarbeit erzeugte Wärmemenge über die für die gewünschte Temperatur erforderliche Wärmemenge hinausgeht, wird die Überschußmenge über die Heiz-Kühlkreise abgezogen.
In den Extruderabschnitten wird das EPDM aufgeschmolzen. Zugleich werden die Molekülketten miteinander vernetzt. Das erlangte und eingehaltene Temperaturprofil entspricht den Vorgaben des EPDM-Herstellers.
In anderen Anwendungsbeispielen wird eine andere Temperatur eingestellt und eingehalten.

Zusätzlich ist im Ausführungsbeispiel für die Verarbeitung des EPDM eine Ölzugabe vorgesehen. Die Ölzugabe erfolgt über einen Einspritzring 21. Der Einspritzring 21 ist zwischen den Modulen 3.1 und 3.2 vorgesehen. Der Einspritzring 21 ist über eine Leitung mit einer Pumpe und einem Ölvorratsbehälter verbunden.

Im Ausführungsbeispiel bildet der Einspritzring 21 den Anlaufring für die umlaufenden Planetspindeln des Moduls 3.1.
Ferner sind an dem Einspritzring 21 Öffnungen vorgesehen, in denen Druckmeßgeräte und Temperaturmeßgeräte sitzen. Diese Geräte sind in die Steuerung der Heiz-Kühlkreise eingebunden.
Wegen der Einzelheiten des Einspritzringes 21 und dessen Anordung im Gehäuse wird Bezug genommen auf die DE 19720916B4.
Auch an den Moduln 3.2 und 3.3 sind Anlaufringe 22 und 23 vorgesehen, mit denen sich Druckmessungen und Temperaturmessungen wie an dem Modul 3.1 durchführen lassen.

Das EPDM wird mit der Temperatur von 220 Grad Celsius aus der Extrusionsanlage ausgetragen. Dazu ist der Modul 4 austrittseitig mit eine Runddüse 24 mit 20 mm Durchmesser vorgesehen. Das ausgetragene EPDM wird zwischen Kühlwalzen 25 abgekühlt.

Das Ausführungsbeispiel nach Fig. 1a unterscheidet sich vom Ausführungsbeispiel nach Fig. 1 durch eine andere Kühlung am Austrag. In dem Ausführungsbeispiel besteht die Kühlung für das EPDM aus einem einfachen Wasserbehälter 26.

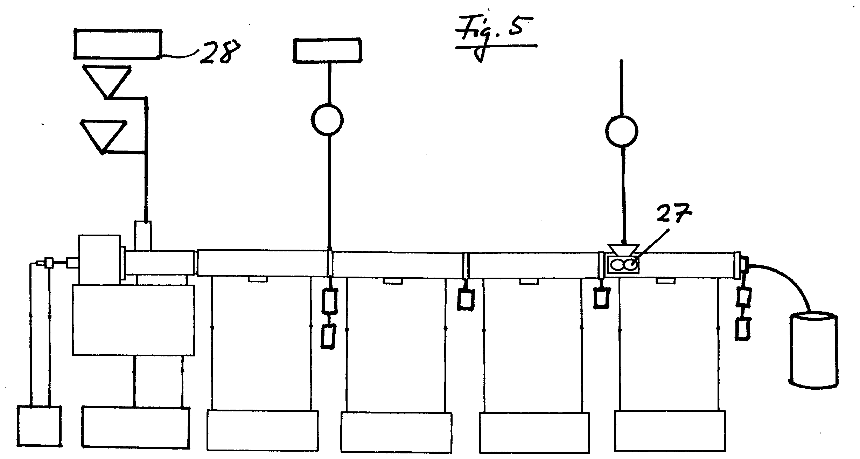

Das Ausführungsbeispiel nach Fig. 5 unterscheidet sich vom Ausführungsbeispiel nach Fig. 1a durch eine Entgasung 27 und durch eine zusätzliche Dosierung 28.

Die Entgasung 27 besteht aus einem seitlich angeflanschten Doppelschneckenextruder, mit dem der Schmelzeaustritt verhindert werden kann, aber eine Ausgasung zugelassen wird. Die Ausgasung wird durch einen am Doppelschneckenextruder anliegenden Saugzug bewirkt.

Die zusätzliche Dosierung 28 dient zur Einmischung eines weiteren Polymers in das EPDM.

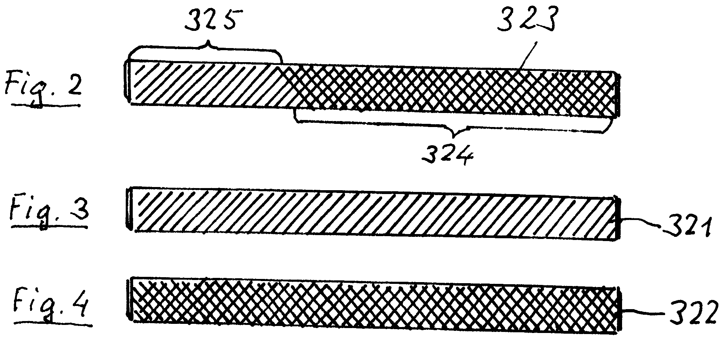

Fig. 3 zeigt schematisch herkömmliche Planetspindeln 321 für Planetwalzenextruder Diese Planetspindeln 321 bilden mehrgängige Schnecken, die sich mit gleichbleibender Neigung über die gesamte Spindellänge erstrecken.

Die Schneckengänge sind in der Zeichnung durch schräg zur Spindellängsachse verlaufende Striche dargestellt.

Die Schneckengänge verlaufen in der Seitenansicht von rechts rechtsgängig, im Uhrzeigersinn. Die Schnecken besitzen außenseitig eine Verzahnung. Die korrespondierende spiegelbildliche Verzahnung findet sich an der Zentralspindel des Planetwalzenextruderabschnittes und dem innen verzahnten umgebenden Gehäuse, so daß die Planetspindeln 321 sowohl mit der Gehäuseverzahnung als auch mit der Zentralspindel kämmen können.

Fig. 4 zeigt bekannte Planetspindeln 322, welche einerseits die gleichen Schneckengänge wie die Schnecken/Spindeln nach Fig. 3 besitzen. Andererseits besitzen die Spindeln zugleich linksgängig verlaufende Nuten, welche die rechtsgängig verlaufenden Schneckengänge schneiden. Die linksgäng verlaufenden Nuten sind mit Strichen in der Fig. 4 dargestellt, welche die aus Fig. 3 bekannten Schneckengänge rechtwinklig kreuzen. Das ist mit kreuzenden Strichen dargestellt. Durch die kreuzenden Nuten werden die Stege zwischen den Schneckengängen, welche im Querschnitt die Zähne der Verzahnung bilden, unterbrochen. Die zwischen zwei Unterbrechungen verbleibenden Zähne bilden einen stachelartigen/noppenartigen Zahn. Die vielen nebeneinander entstehenden Stachel/Noppen führen zu der Bezeichnung Noppenverzahnung. Die Unterbrechungen werden im weiteren als Zahnlücken bezeichnet.

Fig. 2 zeigt weitere Planetenspindeln 23 mit einem Teil 25, welcher der Verzahnung nach Fig. 3 nachgebildet ist, und mit einem Teil 24, welcher der Verzahnung nach Fig. 4 nachgebildet ist.

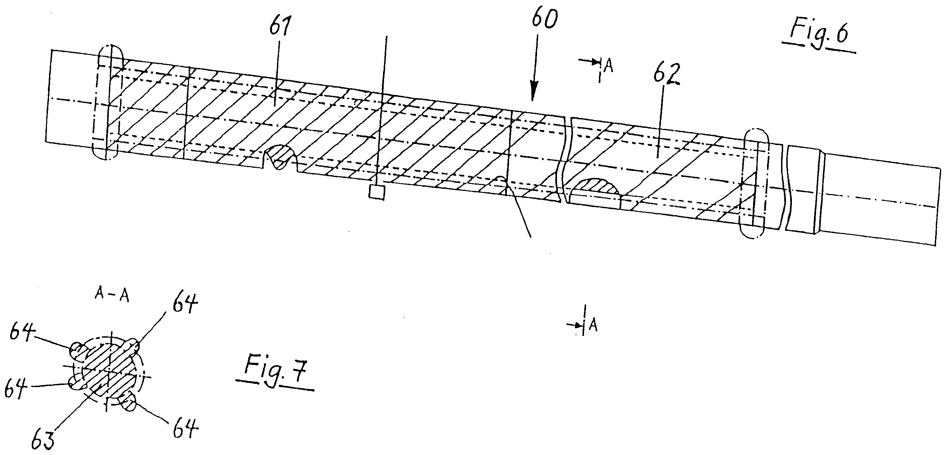

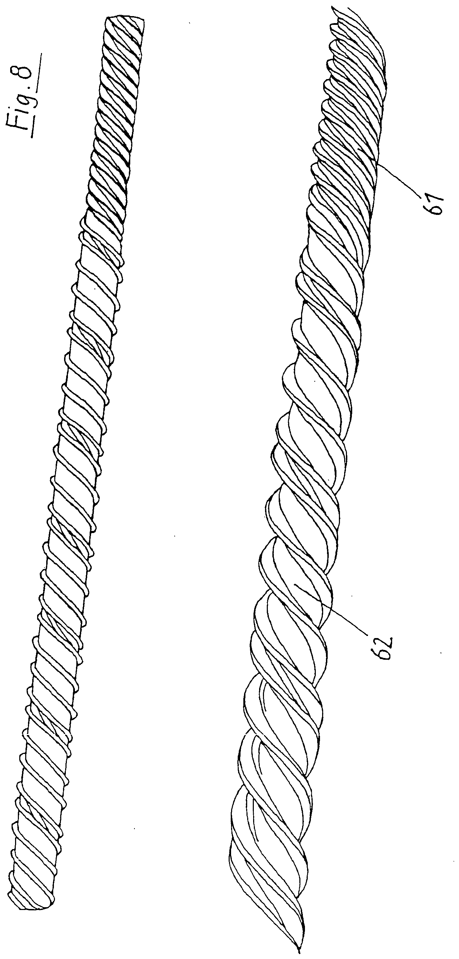

Fig. 6 und 8 zeigen für die Verwendung eines Planetwalzenextruders in der Trocknungsstation einer EPDM-Aufbereitungsanlage eine erfindungsgemäße Planetspindel 60.
Die Planetspindel 60 besteht aus zwei Teilen 61 und 62. Der Teil 61 entspricht einer herkömmlichen Planetspindel mit vollem Zahnbesatz. Im Ausführungsbeispiel handelt es sich um eine Planetspindel mit einem Teilkreisdurchmesser von 34mm, mit einem Außendurchmesser von 42mm und einem Durchmesser von 26mm am Zahnfuß des Zahnbesatzes. Im Ausführungsbeispiel hat der Teil 61 eine Länge von 200mm. Die Gesamtlänge der Planetspindel 60 beträgt 1000mm.
Dadurch ergibt sich für den Teil 62 eine Länge von 800 mm. Der Teil 62 definiert den Bereich erfindungsgemäßer Ausbildung der Planetspindel, Teil 61 definiert den Restbereich. Im Teil 61 hat die Spindel 7 Zähne 64, die ähnlich wie Gewindegänge, aber mit sehr großer Steigung an der Planetspindelaußenseite verlaufen. Dies ist in der Fig. 8 dargestellt.

Im Teil 62 sind 3 Zähne 64 abgefräst worden. Das ist vor einer Oberflächenhärtung der Zähne 64 erfolgt. Die Verteilung der verbliebenen Zähne ist in Fig. 7 dargestellt. Dabei liegen noch zwei Zähne 64 nebeneinander. Zu den übrigen Zähnen ergibt sich eine Zahnlücke.

Die Planetspindeln nach den Fig. 6 und 8 werden als Transportspindeln bezeichnet, weil sie im Unterschied zu den Noppenspindel eine größere Transportwirkung haben.
Jedoch zeigt sich auch, daß die von den Transportspindeln geleistete Verformungsarbeit überraschend gering ist. Dementsprechend gering ist der Energieeintrag in das EPDM. Das erleichtert die Einhaltung der für das EPDM erforderlichen Temperaturführung.

In den Ausführungsbeispielen nach Fig. 1,1a und 5 handelt es sich um einen Extruder mit 70 mm Gehäusedurchmesser (bezogen auf den Teilkreisdurchmesser der Gehäuseinnenverzahnung). Die maximale Planetspindelzahl für den Besatz der Module 3.2, 3.2, 3.3 und 4 ist 7. Es sind jeweils 6 Planetspindeln der Bauart nach den Fig.6 und 8 für die Verarbeitung von EPDM in jedem Modul vorgesehen.
In anderen Ausführungsbeispielen sind in den verschiedenen Modulen unterschiedliche Planetspindeln vorgesehen. Die Unterschiede können dabei die Zahl der "fehlenden" Zähne betreffen. Die Unterschiede können sich auch aus der Kombination mit Spindeln anderer Bauart ergeben. Die Unterschiede können sich auch aus der Kombination unterschiedlicher Verzahnung an einzelnen oder sämtlichen Planetspindeln ergeben. Mindestens ist eine teilweise als Transportspindel ausgebildete Planetspindel in der Extrusionsanlage vorgesehen.

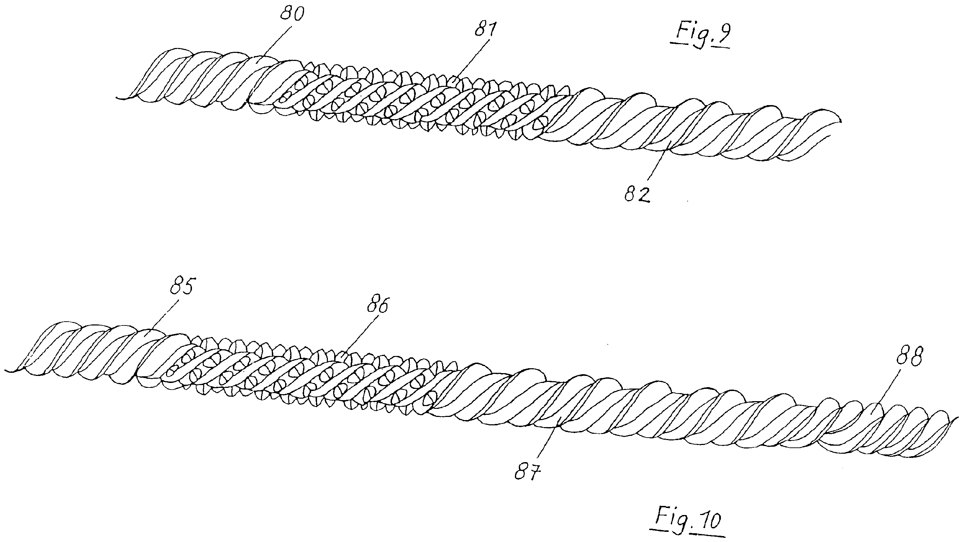

Fig. 9 zeigt eine Planetspindel mit einer Normalverzahnung 80 an einem Ende, dann einen Bereich 81 mit einer Noppenverzahnung und einen Bereich 82 mit einer reduzierten Verzahnung wie vorstehend beschrieben.

Fig. 10 zeigt eine Planetspindel mit einer Normalverzahnung 85 an einem Ende, dann einem Bereich 86 mit einer Noppenverzahnung, dann einem Bereich 87 mit einer reduzierten Verzahnung und wieder eine Normalverzahnung am anderen Spindelende.

Die Länge der Module beträgt in den Ausführungsbeispielen 400mm. Die Planetspindeln besitzen im Ausführungsbeispiel eine geringere Länge, zum Teil eine unterschiedliche Länge.

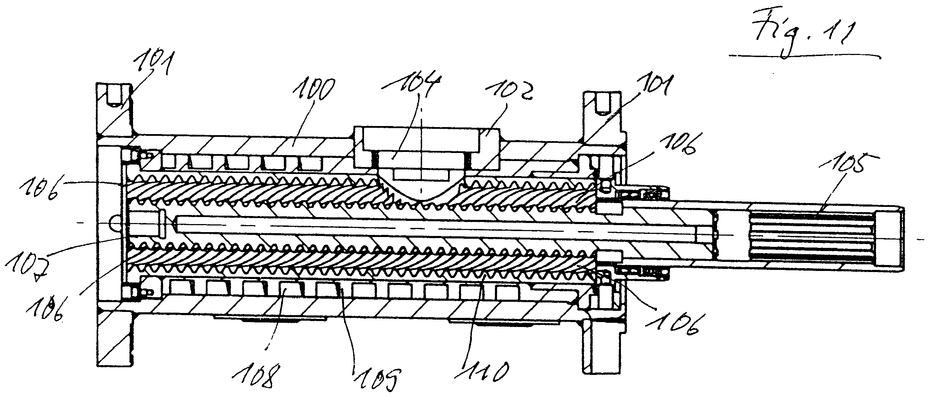

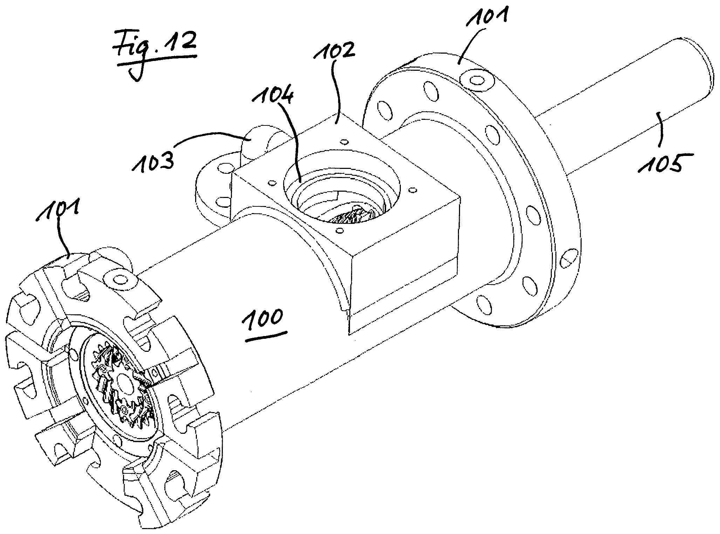

Nach Fig. 11 und 12 ist der Einzug 2 als Planetwalzenextrudermodul ausgebildet.
Zu dem Planetwalzenextrudermodul gehört ein Gehäuse 100, welches an jedem Ende mit einem Flansch 101 versehen ist. Außerdem besitzt das Gehäuse eine Buchse 109, welche mit einer Innenverzahnung 110 versehen ist. Außen sind die Buchse Kühl/Heizkanäle 108 eingearbeitet. In dem montierten Zustand sind die Heiz/Kühlkanäle 108 außen durch das Gehäuse geschlossen. An den Enden der Heiz/Kühlkanäle 108 sind Zuleitungen/Ableitungen für ein Temperierungsmittel vorgesehen. In Fig. 12 ist von den beiden Zuleitungen/Ableitungen ein Anschluß 103 dargestellt.

Mittig in dem Gehäuse 100 ist eine Zentralspindel 107 angeordnet. Antriebsseitig ist die Zentralspindel 107 als Vielkeilwelle 105 ausgebildet, um mit einem Getriebemotor zu korrospondieren.

Zwischen der Innenverzahnung 110 und der Zentralspindel 107 sind Planetspindeln 106 vorgesehen. Die Planetspindeln 106 kämmen mit der Verzahnung der Zentralspindel 107 und der Innenverzahnung 110.
In der Zeichnung zeigen die Planetspindeln 106 eine Normal/Standardverzahnung wie die Zentralspindel und die Buchse 109. Anders als dargestellt handelt es sich aber um Transportspindeln.

Überdies ist oben auf dem Gehäuse 100 ein Flansch 102 mit einer Einlauföffnung 104 für das zur Extrusion bestimmte Einsatzmaterial vorgesehen. An dem Flansch 102 wird ein Einlauftrichter befestigt.

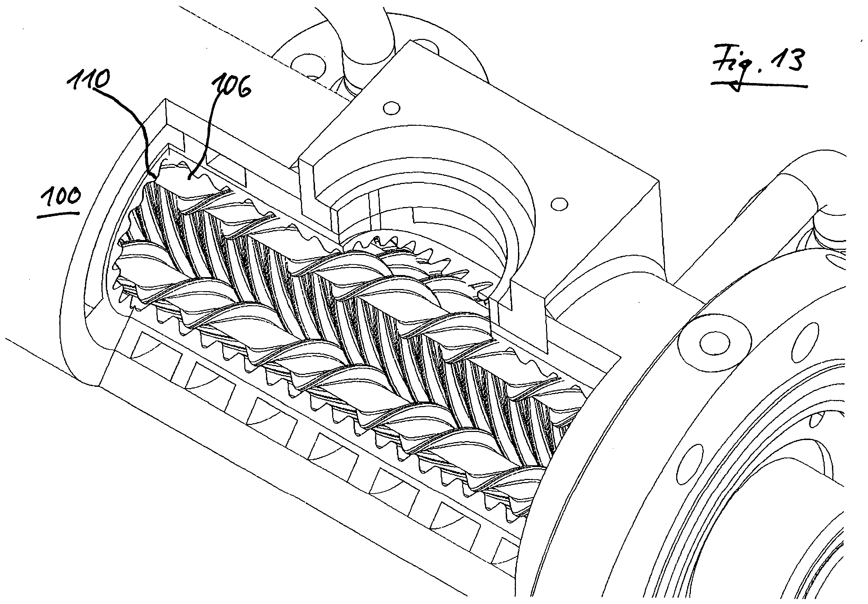

Fig. 13 zeigt den Einzug mit einem geöffneten Mantel 100, so daß der Blick auf die Transportspindeln 106 frei ist.

Im Betrieb läuft das Extrusionsmaterial aus dem nicht dargestellten Einlauftrichter drucklos in die Einlauföffnung 104 des Mantels 100 ein. Drucklos heißt, daß über das Gewicht der über der Einlauföffnung 104 stehenden Materialsäule hinaus kein Druck in Richtung der Einläuföffnung auf das Material ausgeübt wird.
Das Extrusionsmaterial tritt zwischen die Transportspindeln 106 und wird von den Transportspindeln erfaßt und extrem schonend in Mischung gebracht und in Richtung der anderen Planetwalzenextruderabschnitte/Module gefördert, um dort weiter bearbeitet zu werden.

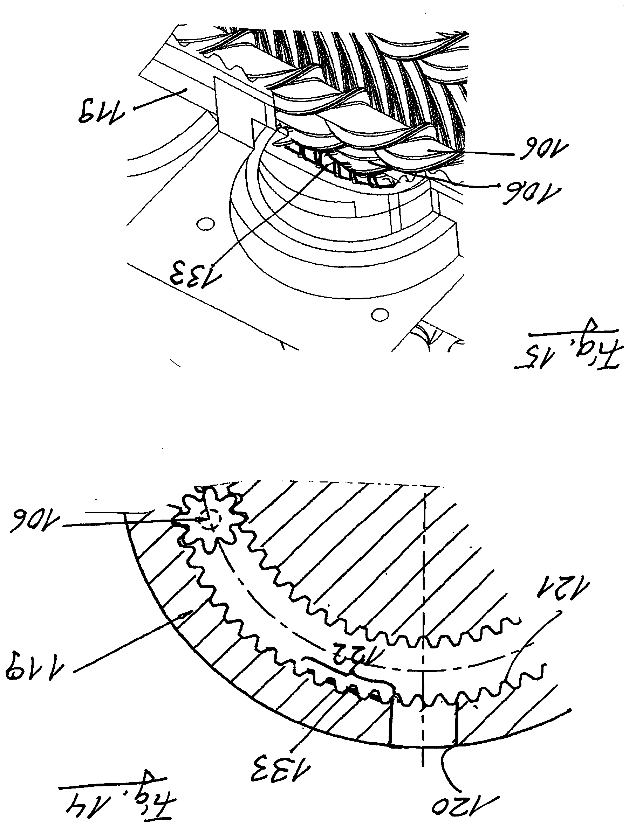

Fig. 14 und 15 zeigen ein weiteres Ausführungsbeispiel.
Das weitere Ausführungsbeispiel unterscheidet sich von dem Ausführungsbeispiel nach den Fig. 11 bis 13 durch einen anderen Gehäusemantel 119. Der Gehäusemantel 119 besitzt auch eine Einlauföffnung 120 für Einsatzmaterial. Darüber hinaus ist der Gehäusemantel 119 mit einer Innenverzahnung 121 versehen, die wie die Innenverzahnung nach Fig. 11 bis 13 geeignet ist, mit den Planetspindeln 106 zusammen zu wirken. Im Unterschied zur Gehäuseinnenverzahnung nach Fig. 11 bis 13 ist die Verzahnung ist die Innenverzahnung 121 aber in dem sich an die Einlauföffnung 120 anschließenden und in Umlaufrichtung der Zentralspindel erstreckenden Bereich 122 abgeflacht. Die Umlaufrichtung der Zentralspindel verläuft in der Darstellung nach Fig. 14 im Uhrzeigersinn.

An dem der Einlauföffnung benachbarten Ende sind die Zähne um ¾ ihrer Höhe durch die Abflachung verringert. Diese Abflachung 133 nimmt im Ausführungsbeispiel in Umlaufrichtung der Zentralspindel ab. Dabei erstreckt sich die Abflachung 133 im Ausführungsbeispiel über 1/10 des Umfanges des zu der Gehäuseinnenverzahnung gehörenden Teilkreises. In anderen Ausführungsbeispielen kann sich der Bereich über mindestens ¼ des Umfanges des Teilkreises oder mindestens ½ des Umfanges des Teilkreises oder mindestens ¾ des Umfanges des Teilkreises erstrecken. Dabei wird das Erstreckungsmaß des Bereiches 122 von dem Punkt aus bestimmt, in dem sich der Bereich 122 in der Darstellung nach Fig. 14 mit einem Schnitt durch die Mitte der im Querschnitt kreisförmigen Einlauföffnung an die Einlauföffnung anschließt.

Die Erstreckungsrichtung des Bereiches 122 verläuft in der Darstellung nach Fig. 14 allein in Umfangsrichtung. In anderen Ausführungsbeispielen kann die in Fig. 14 dargestellte Erstreckungsrichtung auch in Umfangsrichtung und zugleich geneigt zur Längsrichtung des Gehäuses verlaufen.

Fig. 15 zeigt, daß die Abflachung 133 sich im Ausführungsbeispiel über die gesamte Öffnungsweite der Einlauföffnung erstreckt. In anderen Ausführungsbeispielen erstreckt sich die Abflachung 133 über höchstens 90% der Öffnungsweite der Einlauföffnung, in noch weiteren Ausführungsbeispielen über höchstens 80% der Öffnungsweite der Einlauföffnung und noch anderen Ausführungsbeispielen über höchstens 70% der Öffnungsweite der Einlauföffnung.
Die Abflachung 133 kann sich bei Bedarf in der in Fig. 15 dargestellten Breite in noch weiteren Ausführungen auch über die Öffnungsweite der Einlaufhöffnung hinaus erstrecken, zum Beispiel um höchstens weitere 10% der Öffnungsweite oder um höchstens weitere 20% der Öffnungsweite oder um höchstens 30% der Öffnungsweite.

Die in Fig. 14 und 15 gezeigte Abflachung bildet einen Einlauftrichter, der den Einzug des Einsatzmaterials in die Extrusionsanlage erleichtert.

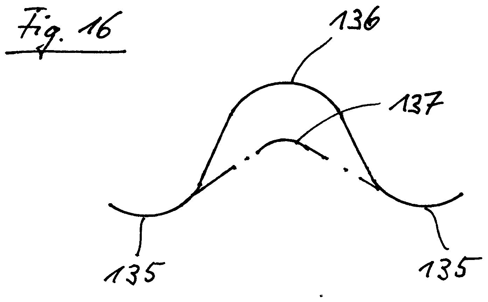

Fig. 16 zeigt einen ursprünglichen Zahn 136 zwischen Zahnlücken 135. Die Darstellung beinhaltet einen Ausschnitt einer Gehäuseinnenverzahnung.
Durch Funkenerosion ist ein strich-punktiert dargestellter Zahn 137 mit geringerer Höhe, rundem Kopf und Zahnflanken gezeigt, die zum Teilkreisdurchmesser der Gehäuseinnenverzahnung eine geringere Neigung aufweisen als die Zahnflanken des ursprünglichen Zahnes 136.

## Patentansprüche

1. Extruder,
wobei Einsatzmaterial in den Extruder einziehbar ist,
wobei der Materialeinzug durch einen Planetwalzenextruderabschnitt gebildet wird, der aus einer in einem Gehäuse (100, 119) umlaufenden Zentralspindel (107) und Planetspindeln (106) besteht,
wobei das Gehäuse (100, 119) innen verzahnt ist und die Zentralspindel (107) im Abstand umgibt und die Planetspindeln (106) in dem Zwischenraum zwischen der Zentralspindel (107) und dem Gehäuse (100, 119) um die Zentralspindel (107) umlaufen und dabei sowohl mit der Zentralspindel (107) als auch mit der Gehäuseinnenverzahnung (110, 121) kämmen,
wobei der Materialeinzug unmittelbar durch den Gehäusemantel (100, 119) hindurch geführt ist,
**dadurch gekennzeichnet,**
**daß** die Gehäuseinnenverzahnung (110, 121) zur Bildung eines Einlauftrichters in der Verzahnung zumindest in dem Bereich der Abflachung (133) abgeflacht ist, der sich an die Einlauföffnung (100, 120, 122) des Gehäusemantels (100, 119) anschließt und sich in Umlaufrichtung der Zentralspindel (107) erstreckt.

2. Extruder nach Anspruch 1, **dadurch gekennzeichnet, daß** der Einlaufbereich (100,120,122) die Ringfläche am Gehäusemantel (100,119) ist, in der die Öffnung für den Materialeinlauf (100,120,122) liegt, plus/minus einer Ringflächenbreitenabweichung von 50%, vorzugsweise von plus/minus 30% und noch weiter bevorzugt von plus/minus 10% einer Ringflächenbreitenabweichung.

3. Extruder nach Anspruch 1 oder 2,
**gekennzeichnet durch**
a) die Verwendung von Planetspindeln (106), an denen mindestens ein Zahn, aber nicht alle Zähne nachträglich ganz oder teilweise herausgearbeitet worden ist und/oder
b) die Verzahnung nach einer festgelegten Zahnkontur an Planetspindeln (106) hergestellt worden ist, wobei die Zahnkontur gleich einer Verzahnung mit nachträglich ganz oder teilweise herausgearbeiteten Zähnen ist.

4. Extruder nach Anspruch 3, **gekennzeichnet durch** die Verwendung von Planetspindeln (106) mit höchstens 4 verbliebenen Zähnen, vorzugsweise höchstens 3 verbliebenen Zähnen, noch weiter bevorzugt höchstens 2 verbliebenen Zähnen und höchst bevorzugt einem verbliebenen Zahn am Umfang der Planetspindeln (106).

5. Extruder nach einem der Ansprüche 1 bis 4, **gekennzeichnet durch** die Verwendung von Planetspindeln (106), die
entweder
in dem Bereich des reduzierten Zahnbesatzes eine gerade Zahl von Zähnen besitzen, während die Verzahnung an dem korrespondierenden Planetwalzenteil eine ungerade Zahl von Zähnen besitzt
oder
in dem Bereich des reduzierten Zahnbesatzes eine ungerade Zahl von Zähnen besitzen, während die Verzahnung an dem korrespondierenden Planetwalzenteil eine gerade Zahl von Zähnen besitzt.

6. Extruder nach einem der Ansprüche 1 bis 5, **dadurch gekennzeichnet, daß** die Planetspindeln (106) außerhalb des Einlaufbereiches (100,120,122) mit einer anderen Verzahnung versehen sind.

7. Extruder nach Anspruch 6, **dadurch gekennzeichnet, daß** die andere Verzahnung eine Normalverzahnung und/oder eine Igelverzahnung und/oder eine Noppenverzahnung ist.

8. Extruder nach einem der Ansprüche 1 bis 7, **gekennzeichnet durch** die Verwendung einteiliger oder mehrteiliger Planetspindeln (106) und/oder Zentralspindeln (107) und/oder Gehäuseverzahnungen.

9. Extruder nach einem der Ansprüche 1 bis 8, **dadurch gekennzeichnet, daß** der Anteil der Planetspindeln (106) mit Transportspindelverzahnung mindestens 50%, vorzugsweise mindestens 70% und noch weiter bevorzugt mindestens 70% am Planetspindelbesatz des den Einzug bildenden Planetwalzenextruderabschnitts beträgt.

10. Extruder nach einem der Ansprüche 1 bis 9, **dadurch gekennzeichnet, daß** die Planetspindeln (106) mit Transportspindelverzahnung gleichmäßig im Planetspindelbesatz verteilt sind.

11. Extruder nach einem der Ansprüche 1 bis 10, **dadurch gekennzeichnet, daß** die Zahl der Zähne im Planetspindelbesatz so gewählt ist, daß innerhalb von 10 Umläufen, vorzugsweise mindestens innerhalb von 7 Umläufen und nach weiter bevorzugt mindestens innerhalb von 4 Umläufen und höchst bevorzugt bei jedem Umlauf der Planetspindeln (106) um die Zentralspindel (107)ein Planetspindelzahn in jede Zahnlücke der Zentralspindelverzahnung und in jede Zahnlücke der Innenverzahnung des Gehäuses (100,119) greift.

12. Extruder nach Anspruch 1, **dadurch gekennzeichnet, daß** die Zähne der Gehäuseinnenverzahnung (110,121) in dem trichterbildenden Bereich maximal bis in den Zahngrund abgeflacht sind, vorzugsweise um maximal 90% der ursprünglichen Zahnhöhe abgeflacht worden sind, noch weiter bevorzugt um maximal 80% der ursrpünglichen Zahnhöhe abgeflacht worden ist.

13. Extruder nach Anspruch 12, **dadurch gekennzeichnet, daß** die Abflachung mit zunehmendem Abstand von der Einlauföffnung (100,120,122) abnimmt.

14. Extruder nach einem der Ansprüche 1, 12,13, **dadurch gekennzeichnet, daß** daß die Abflachung sich mindestens über 1/10, vorzugsweise über mindestens 1/5, nach weiter bevorzugt über mindestens ½ und höchst bevorzugt über mindestens ¾ des Umfanges des Teilkreises der Gehäuseinnenverzahnung (110,121) erstreckt.

15. Extruder nach einem der Ansprüche 1 und 12 bis 14, **dadurch gekennzeichnet, daß** der Bereich der Gehäuseinnenverzahnungs-Abflachung eine Breite hat, welche höchstens gleich 70% der Öffnungsweite der Einlauföffnung(100,120,122), vorzugsweise höchstens gleich 80% der Offnungsweite, noch weiter bevorzugt höchstens gleich 90% der Öffnungsweite und höchst bevorzugt höchstens gleich der Öffnungsweite der Einlauföffnung (100,120,122) ist.

16. Extruder nach einem der Ansprüche 12 bis 15, **dadurch gekennzeichnet, daß** die abgeflachten Zähne mit Zahnflanken versehen sind, deren Neigung geringer ist, als die Zahnflanken der Zähne im nicht abgeflachten Bereich und/oder die abgeflachten Zähne oben mit einer Rundung versehen sind.

17. Extruder nach einem der Ansprüche 1 und 12 bis 16, **dadurch gekennzeichnet, daß** der Bereich der Gehäuseinnenverzahnungs-Abflachung eine Breite hat, welche höchstens 30% größer als die Öffnungsweite der Einlauföffnung (100,120,122), noch weiter bevorzugt höchstens 20% größer als die Öffnungsweite der Einlauföffnung (100,120,122) und höchst bevorzugt höchstens 10% größer als Öffnungsweite der Einlauföffnung (100,120,122) ist.

18. Extruder nach einem der Ansprüche 1 und 12 bis 17, **dadurch gekennzeichnet, daß** die abgeflachten Zähne gegenüber den ursprünglichen Zähnen Zahnflanken aufweisen, die zum Teilkreis der Gehäuseinnenverzahnung (110,121) eine geringere Neigung aufweisen und in einen gerundeten Zahnkopf münden.

19. Extruder nach Anspruch 1 oder 18, **dadurch gekennzeichnet, daß** mindestens die Kante der Einlauföffnung (100,120,122) am Übergang zur Gehäueinnenverzahnung eine Abrundung aufweist, wobei vorzugsweise der Radius der Rundung mindestens gleich ¼ der Zahnhöhe, nach weiter bevorzugt mindestens gleich ½ der Zahnhöhe ist.

20. Extruder nach einem der Ansprüche 1 bis 19, **dadurch gekennzeichnet, daß** der als Füllteil ausgebildete Planetwalzenextruderabschnitt mit einer Temperierung versehen ist und daß die Temperierung mindestens bereits an der Einlauföffnung (100,120,122) einsetzt.

21. Extruder nach einem der Ansprüche 1 bis 20, **gekennzeichnet durch** eine Länge von kleiner/gleich 2 D des als Planetwalzenextruderabschnitts ausgebildeten Füllteils, wobei die Maßangabe sich auf den Abstand des in Förderrichtung weisenden Endes von dem Einlauf (100,120,122) bezieht und wobei D der Teilkreisdurchmesser der Gehäuseinnenverzahnung (110,121)ist.

22. Extruder nach Anspruch 21, **gekennzeichnet durch** eine Länge von größer 2D des als Planetwalzenextruderabschnitts ausgebildeten Füllteils, wobei die Maßangabe sich auf den Abstand des in Förderrichtung weisenden Endes von dem Einlauf (100,120,122) bezieht und wobei D der Teilkreisdurchmesser der Gehäuseinnenverzahnung (110,121) ist, und **dadurch** gekennzeichnet, daß die Temperierung mindestens aus zwei Abschnitten besteht, von denen der einlaufseitige Abschnitt eine Länge von kleiner/gleich 0,5D aufweist, Temperierungsabschnittsendes von dem Einlauf (100,120,122) ist und wobei D der Teilkreisdurchmesser der Gehäusesinnenverzahnung (110, 121) ist.

23. Extruder nach einem der Ansprüche 1 bis 22, **dadurch gekennzeichnet, daß** die Mittelachse der Einlauföffnung (100,120,122) den Teilkreisdurchmesser der Gehäuseinnenverzahnung (110,121) als Sekante schneidet oder als Tangente an dem Teilkreis der Gehäuseinnenverzahnung (110,121) verläuft oder im Abstand von dem Teilkreis der Gehäuseinnenverzahnung (110,121) verläuft, wobei der Abstand höchstens gleich der Dicke des Gehäusemantels (100,119) ist.

## Claims

1. Extruder,
wherein feed material can be fed into the extruder,
wherein the material feed is formed by means of a planetary roller extruder section that consists of a rotating central spindle (107) and planetary spindles (106) in a housing (100, 119),
wherein the housing (100, 119)is internally toothed and encloses at a distance the central spindle (107), and in the interspace between the central spindle (107) and the housing (100, 119) the planetary spindles (106) rotate about the central spindle (107), thereby meshing with both the central spindle (107) and the internal toothing of the housing (110, 121),
wherein the material feed is guided directly through the housing shell (100, 119),
**characterised in that**
the internal toothing of the housing (110, 121), in order to form a feed hopper in the toothing, is truncated, at least in the truncated zone (133), which is connected to the feed inlet (100, 120, 122) of the housing shell (100, 119), and extends in the rotational direction of the central spindle (107).

2. Extruder according to claim 1, **characterised in that** the feed zone (100, 120, 122) is the annular surface area on the housing shell (100, 119) in which the inlet for the material feed (100, 120, 122) is located, plus/minus an annular surface width deviation of 50%, preferably plus/minus 30%, and even more preferably plus/minus 10% of an annular surface width deviation.

3. Extruder according to claim 1 or 2, **characterised by**
a) the use of planetary spindles (106) on which at least one tooth, but not all teeth, have been subsequently completely or partially machined out and/or
b) the toothing has been produced according to a given tooth contour on the planetary spindles (106), wherein the tooth contour is identical to a toothing with subsequently completely or partially machined out teeth.

4. Extruder according to claim 3, **characterised by** the use of planetary spindles (106) having at most four remaining teeth, preferably at most three remaining teeth, even more preferably at most two remaining teeth and most preferably one remaining tooth on the circumference of the planetary spindles (106).

5. Extruder according to one of claims 1 to 4, **characterised by** the use of planetary spindles (106) that
either
possess an even number of teeth in the zone of the reduced number of teeth, whereas the toothing on the corresponding planetary roller part possesses an odd number of teeth
or
possess an odd number of teeth in the zone of the reduced number of teeth, whereas the toothing on the corresponding planetary roller part possesses an even number of teeth.

6. Extruder according to one of claims 1 to 5, **characterised in that** the planetary spindles (106) outside the feed zone (100, 120, 122) are provided with a different toothing.

7. Extruder according to claim 6, **characterised in that** the different toothing is a normal toothing and/or a porcupine toothing and/or a back-cut toothing.

8. Extruder according to one of claims 1 to 7, **characterised by** the use of single-section or multi-section planetary spindles (106) and/or central spindles (107) and/or housing toothings.

9. Extruder according to one of claims 1 to 8, **characterised in that** the percentage of the planetary spindles (106) having transport spindle toothing is at least 50%, preferably at least 70% and even more preferably at least 70% on the planetary spindle array of the planetary roller extruder section that forms the feeder.

10. Extruder according to one of claims 1 to 9, **characterised in that** the planetary spindles (106) having transport spindle toothing are evenly distributed in the planetary spindle array.

11. Extruder according to one of claims 1 to 10, **characterised in that** the number of teeth in the planetary spindle array is selected, such that within 10 rotations, preferably at least within 7 rotations and more preferably within at least 4 rotations and most preferably with each rotation of the planetary spindles (106) about the central spindle (107) a planetary spindle tooth engages into each tooth gap of the central spindle toothing and into each tooth gap of the inner toothing of the housing (100, 119).

12. Extruder according to claim 1, **characterised in that** the teeth of the inner toothing of the housing (110, 121) in the zone that forms the hopper have been truncated at most down to the tooth root, preferably truncated by as much as 90% of the original tooth height, even more preferably have been truncated by as much as 80% of the original tooth height.

13. Extruder according to claim 12, **characterised in that** the truncation decreases as the distance from the feed inlet (100, 120, 122) increases.

14. Extruder according to one of claims 1, 12, 13, **characterised in that** the truncation extends at least over 1/10, preferably over at least 1/5, still more preferably over at least ½ and most preferably over at least ¾ of the circumference of the pitch circle of the inner toothing of the housing (110, 121).

15. Extruder according to one of claims 1 and 12 to 14, **characterised in that** the width of the zone of the truncation of the inner toothing of the housing is at most 70% of the inlet width of the feed inlet (100, 120, 122), preferably at most equal to 80% of the inlet width, even more preferably at most equal to 90% of the inlet width and most preferably at most equal to the inlet width of the feed inlet (100, 120, 122).

16. Extruder according to one of claims 12 to 15, **characterised in that** the truncated teeth are provided with tooth flanks that slope less than the tooth flanks of the teeth in the un-truncated zone and/or the tops of the truncated teeth are curved.

17. Extruder according to one of claims 1 and 12 to 16, **characterised in that** the width of the zone of the truncation of the inner toothing of the housing is at most 30% more than the inlet width of the feed inlet (100, 120, 122), even more preferably at most 20% more than the inlet width of the feed inlet (100, 120, 122) and most preferably at most 10% more than the inlet width of the feed inlet (100, 120, 122).

18. Extruder according to one of claims 1 and 12 to 17, **characterised in that** the truncated teeth,in contrast to the original teeth, have tooth flanks that have a lesser slope to the pitch circle of the inner toothing of the housing (110, 121) and end in a rounded tooth tip.

19. Extruder according to claim 1 or 18, **characterised in that** at least the edge of the feed inlet (100, 120, 122) at the transition to the inner teeth of the housing has a curvature, wherein the radius of the curvature is preferably equal to at least ¼ of the tooth height, still more preferably at least equal to ½ of the tooth height.

20. Extruder according to one of claims 1 to 19, **characterised in that** the planetary roller extruder section, constructed as the feed section, is provided with a temperature control and the temperature control already begins at least at the feed inlet (100, 120, 122).

21. Extruder according to one of claims 1 to 20, **characterised by** a length that is less/equal to 2D of the planetary roller extruder section constructed as the feed section, wherein the stated dimension refers to the distance of the end facing the conveying direction from the inlet (100, 120, 122) and wherein D is the pitch diameter of the inner toothing of the housing (110, 121).

22. Extruder according to claim 21, **characterised by** a length that is greater than 2D of the planetary roller extruder section constructed as the feed section, wherein the stated dimension refers to the distance of the end facing the conveying distance from the inlet (100, 120, 122) and wherein D is the pitch diameter of the inner toothing of the housing (110, 121), and **characterised in that** the temperature control consists of at least two sections, of which the section on the inlet side has a length less than/equal to 0.5D and wherein D is the pitch diameter of the inner toothing of the housing (110, 121).

23. Extruder according to one of claims 1 to 22, **characterised in that** the central axis of the feed inlet (100, 120, 122) intersects the pitch diameter of the inner toothing of the housing (110, 121) as the secant or runs as the tangent to the pitch circle of the inner toothing of the housing (110, 121) or runs at a distance from the pitch circle of the inner toothing of the housing (110, 121), wherein the distance is at most equal to the thickness of the housing shell (100, 119).

## Revendications

1. Extrudeuse dans laquelle de la matière d'intervention peut être introduite, dans laquelle l'admission de matière est formée par une section d'extrudeuse à cylindres planétaires qui est constituée d'une vis centrale (107) tournant dans un carter (100, 119) et de vis planétaires (106), dans laquelle le carter (100, 119) est denté à l'intérieur et entoure la vis centrale (107) à une certaine distance et les vis planétaires (106) tournent autour de la vis centrale (107) dans l'interstice entre la vis centrale (107) et le carter (100, 119) et s'engrènent aussi bien avec la vis centrale (107) qu'avec l'engrenage intérieur du carter (110, 121), et dans laquelle l'admission de matière traverse directement l'enveloppe du carter (100, 119), **caractérisée en ce que** la denture intérieure du carter (110, 121) est aplatie au moins dans la région de la partie aplatie (133) pour former une trémie d'introduction dans la denture qui se raccorde à l'ouverture d'admission (100, 120, 122) de l'enveloppe du carter (100, 119) et s'étend dans le sens de rotation de la vis centrale (107).

2. Extrudeuse selon la revendication 1 **caractérisée en ce que** la zone d'admission (100, 120, 122) est la surface annulaire de l'enveloppe du carter (100, 119) dans laquelle se trouve l'ouverture pour l'admission de matière (100, 120, 122), plus ou moins un écart de largeur de surface annulaire de 50%, de préférence plus ou moins 30% et encore plus préférablement plus ou moins 10%.

3. Extrudeuse selon la revendication 1 ou 2, **caractérisée par**
a) l'utilisation de vis planétaires (106) sur lesquelles au moins une dent, mais pas toutes les dents, a été totalement ou partiellement façonnée a posteriori et/ou en ce que
b) la denture a été fabriquée d'après un contour de dents défini sur les vis planétaires (106), le contour de dents étant identique à une denture avec des dents totalement ou partiellement façonnées a posteriori.

4. Extrudeuse selon la revendication 3, **caractérisée par** l'utilisation de vis planétaires (106) avec au maximum 4 dents restantes, de préférence au maximum 3 dents restantes, plus préférablement au maximum 2 dents restantes et le plus préférablement au maximum une dent restante à la périphérie des vis planétaires (106),

5. Extrudeuse selon une des revendications 1 à 4, **caractérisés par** l'utilisation de vis planétaires (106) qui soit possèdent un nombre de dents pair dans la zone de la garniture de dents réduite, tandis que la denture dans la partie correspondante des cylindres planétaires possède un nombre de dents impaire, soit possèdent un nombre de dents impair dans la zone de la garniture de dents réduite, tandis que la denture dans la partie correspondante des cylindres planétaires possède un nombre de dents paire.

6. Extrudeuse selon les revendications 1 à 5, **caractérisée en ce que** les vis planétaires (106) sont dotées de l'autre denture en dehors de la zone d'admission (100, 120, 122).

7. Extrudeuse selon la revendication 6, **caractérisée en ce que** l'autre denture est une denture normale et/ou une denture en hérisson et/ou une denture à picots.

8. Extrudeuse selon les revendications 1 à 7, **caractérisée par** l'utilisation de vis planétaires (106) en une ou plusieurs parties et/ou de vis centrales (107) et/ou de dentures de carter.

9. Extrudeuse selon les revendications 1 à 8, **caractérisée en ce que** la proportion de vis planétaires (106) avec une denture de vis de transport représente au moins 50%, de préférence au moins 70% et encore plus préférablement au moins 70% de la garniture de vis planétaires de la section d'extrudeuse à cylindres planétaires constituant l'admission.

10. Extrudeuse selon les revendications 1 à 9, **caractérisée en ce que** les vis planétaires (106) avec une denture de vis de transport sont réparties régulièrement dans la garniture de vis planétaires.

11. Extrudeuse selon les revendications 1 à 10, **caractérisée en ce que** le nombre de dents dans la garniture de vis planétaires est choisi de sorte que, tous les 10 tours, de préférence au moins tous les 7 tours, encore plus préférablement au moins tous les 4 tours et le plus préférablement à chaque tour des vis planétaires (106) autour de la vis centrale (107), une dent de vis planétaire pénètre dans chaque entredent de la denture de la vis centrale et dans chaque entredent de la denture intérieure du carter (100, 119).

12. Extrudeuse selon la revendication 1, **caractérisée en ce que** les dents de la denture intérieure du carter (110, 121) situées dans la partie formant une trémie sont aplaties au maximum jusqu'à leur base, de préférence ont été aplaties sur 90% maximum de leur hauteur initiale, et plus préférablement ont été aplaties sur 80% maximum de leur hauteur initiale.

13. Extrudeuse selon la revendication 12, **caractérisée en ce que** l'aplatissement diminue avec l'augmentation de la distance de l'ouverture d'admission (100, 120, 122).

14. Extrudeuse selon les revendications 1, 12 et 13, **caractérisée en ce que** l'aplatissement s'étend au moins sur 1/10, de préférence sur au moins 1/5, plus préférablement sur au moins 1/2 et le plus préférablement sur au moins 3/4 de l'étendue de l'arc de cercle de la denture intérieure du carter (110, 121).

15. Extrudeuse selon les revendications 1 et 12 à 14, **caractérisée en ce que** la zone d'aplatissement de la denture intérieure du carter a une largeur qui est égale à 70% maximum de la taille de l'ouverture d'admission (100, 120, 122), de préférence égale à 80% maximum de la taille de l'ouverture, plus préférablement égale à 90% maximum de la taille de l'ouverture et le plus préférablement égale à la totalité de la taille de l'ouverture d'admission (100, 120, 122).

16. Extrudeuse selon les revendications 12 à 15, **caractérisée en ce que** les dents aplaties sont dotées de flancs dont l'inclinaison est inférieure à celle des flancs des dents de la zone non aplatie et/ou les dents aplaties sont dotées d'une courbure sur le dessus.

17. Extrudeuse selon les revendications 1 et 12 à 16, **caractérisée en ce que** la zone d'aplatissement de la denture intérieure du carter a une largeur qui est supérieure de 30% maximum à la taille de l'ouverture d'admission (100, 120, 122), de préférence supérieure de 20% maximum à la taille de l'ouverture d'admission (100, 120, 122) et le plus préférablement supérieure de 10% maximum à la taille de l'ouverture d'admission (100, 120, 122).

18. Extrudeuse selon les revendications 1 et 12 à 17, **caractérisée en ce que** les dents aplaties présentent par rapport aux dents d'origine des flancs qui présentent une inclinaison plus faible vers l'arc de cercle de la denture intérieure du carter (110, 121) et débouchent dans une tête de dent arrondie.

19. Extrudeuse selon les revendications 1 ou 18, **caractérisée en ce qu'**au moins le bord de l'ouverture d'admission (100, 120, 122) est arrondi au niveau de la transition avec la denture intérieure du carter, le rayon de l'arrondi étant au moins égal au quart de la hauteur des dents et de préférence au moins égal à la moitié de la hauteur des dents.

20. Extrudeuse selon les revendications 1 à 19, **caractérisée en ce que** la section d'extrudeuse à cylindres planétaires configurée comme une partie de remplissage est dotée d'un dispositif de tempérage et que le dispositif de tempérage intervient au moins déjà à l'ouverture d'admission (100, 120, 122).

21. Extrudeuse selon les revendications 1 à 20, **caractérisée par** une longueur inférieure ou égale à 2 D de la partie de remplissage configurée comme une section d'extrudeuse à cylindres planétaires, la dimension indiquée se rapportant à la distance de l'extrémité de l'admission (100, 120, 122) orientée dans le sens du transport et D étant le diamètre de l'arc de cercle de la denture intérieure du carter (110, 121).

22. Extrudeuse selon la revendication 21, **caractérisée par** une longueur supérieure à 2 D de la partie de remplissage configurée comme une section d'extrudeuse à cylindres planétaires, la dimension indiquée se rapportant à la distance de l'extrémité de l'admission (100, 120, 122) orientée dans le sens du transport et D étant le diamètre de l'arc de cercle de la denture intérieure du carter (110, 121), et **caractérisée en ce que** le dispositif de tempérage est constitué d'au moins deux sections, la section située du côté de l'admission présentant une longueur inférieure ou égale à 0,5 D, l'extrémité de la section de tempérage (100, 120, 122) et D étant le diamètre de l'arc de cercle de la denture intérieure du carter (110, 121).

23. Extrudeuse selon une des revendications 1 à 22, **caractérisée en ce que** l'axe central de l'ouverture d'admission (100, 120, 122) coupe le diamètre de l'arc de cercle de la denture intérieure du carter (110, 121), est tangent à l'arc de cercle de la denture intérieure du carter (110, 121) ou passe à distance de l'arc de cercle de la denture intérieure du carter (110, 121), la distance étant au maximum égale à l'épaisseur de l'enveloppe du carter (100, 119).
